# EUROPEAN PATENT SPECIFICATION

(11) **EP 4 087 385 B1**
(45) Date of publication and mention of the grant of the patent: **10.06.2026**
(21) Application number: 21738903.0
(22) Date of filing: 07.01.2021
(51) Int. Cl.: A01G 25/16, B05B 3/02

(54) **LAWN OR GARDEN MAINTENANCE DEVICE AND RELATED SYSTEM**
RASEN- ODER GARTENPFLEGEGERÄT UND ENTSPRECHENDES SYSTEM
DISPOSITIF D'ENTRETIEN DE PELOUSE OU DE JARDIN ET SYSTÈME ASSOCIÉ

(30) Priority: 07.01.2020 US 202062958128 P; 19.03.2020 US 202062991980 P; 30.07.2020 US 202063058945 P
(43) Date of publication of application: 16.11.2022
(73) Proprietor: Oto Inc., Woodbridge ON L4L 5T7 (CA)
(72) Inventor: SABTI, Ali, Kleinburg, Ontario L4H 3Z4 (CA); ANTCHAK, John R., Aurora, Ontario L4G 2L8 (CA); PORAT, Alexander, Thornhill, Ontario L4J 7S2 (CA)
(74) Representative: Hoffmann Eitle
(86) International application number: PCT/CA2021/050010
(87) International publication number: WO 2021/138741

(56) References cited:
- EP-A1- 3 482 833
- CN-A- 106 804 389
- CN-U- 206 629 634
- US-A- 4 033 509
- US-A- 4 033 509
- US-A1- 2005 199 842
- US-A1- 2016 158 783
- US-A1- 2017 127 625
- US-A1- 2017 359 976
- US-B2- 9 643 196

## Description

### FIELD OF THE DISCLOSURE

This disclosure relates generally to lawn or garden maintenance systems, particularly systems which utilize sprinklers with electric motors for dynamically configurable and accurate spraying.

### BACKGROUND OF THE DISCLOSURE

Lawn maintenance is an inevitable chore of home ownership. In addition to mowing, a well-maintained lawn needs to be regularly irrigated, fertilized and weeded. An entire industry is devoted to this endeavor.

Today's homeowner has two basic options for lawn maintenance. The homeowner can maintain the lawn him or herself, or hire service professionals. Service professionals are quite convenient and typically do a good job, but they are relatively expensive. The effectiveness of service professionals, particularly those involved in the field of weeding, is likely to decrease, or become more expensive, in those jurisdictions that prohibit the use of 'chemical' herbicides (such as glyphosate or 2, 4-D) and/or pesticides in favour of 'natural' or 'organic' herbicides and/or pesticides as the latter typically need to be frequently applied to be effective. For example, organic herbicides may need to be applied once a month or possibly as often as once a week. Similarly, pest repellants such as lawn applied mosquito repellant may need to be applied on a weekly or even on a per use basis.

The do-it yourself homeowner has many options for the type of equipment that he or she can utilize for lawn maintenance. Basic lawn maintenance apparatus includes simple sprinklers for irrigation, spray bottles or pumps for applying liquid herbicides, and spreaders for distributing fertilizer granules. While do-it-yourself lawn maintenance can be satisfying, it is nevertheless quite time consuming to carry out properly and may not be particularly efficient or effective. For example, the typical sprinkler is difficult to control accurately, and the homeowner will quite often waste water - a precious resource - by irrigating adjacent pavement or vertical surfaces or simply using too much water under applicable environmental conditions. Likewise, the very time-consuming manual spraying or spreading of herbicides, pesticides and/or fertilizers often results in inconsistent application of the product, which is an important consideration for effectiveness. Per use applications, for example, of mosquito repellant, can also be quite the chore.

It would be desirable to have a "best of both worlds" solution by providing a relatively economical "set and forget" lawn or garden maintenance device or system that can accurately irrigate and/or distribute lawn or garden solutions such as fertilizers, soil conditioners, herbicides, and/or pesticides on a scheduled or automatic basis, particularly where the schedule is established by or under the guidance of a knowledgeable third party agent. Further relevant prior art is described in US 2005/199 842 A1, US 9 643 196 B2, US 4 033 509 A and CN 106 804 389 A.

### SUMMARY OF THE DISCLOSURE

In one aspect, a lawn or garden maintenance device is disclosed which includes a housing; a water supply coupling provided on the housing; a sprinkler head nozzle rotatably mounted in the housing; a rotary drive mechanism mounted in the housing and operatively connected to the sprinkler head nozzle for bidirectional rotation of the sprinkler head nozzle; means for measuring an angular position of the sprinkler head nozzle; a main water line conduit disposed in the housing for fluidly connecting the water supply coupling and the sprinkler head nozzle; a motorized variable valve disposed in the main water line conduit for adjusting rate of fluid flow therein; means for sensing pressure at or near the sprinkler head nozzle; at least one container for storing concentrated liquid solution, the at least one container being enclosed by the housing; injection means, connected to the at least one solution container and encased by the housing, for injecting concentrated liquid solution into the main water line or sprinkler head nozzle; a microcontroller operatively coupled to the angular position measurement means, the rotary drive mechanism, the pressure sensor means, the motorized variable valve, and the solution injection means so as to (i) control an angular sweep of the sprinkler head spout through actuation of the rotary drive mechanism, (ii) control a sprinkler head water jet throw distance by controlling a position of the motorized variable valve, and (iii) control application of liquid solution by controlling the solution injection means; and means for powering the motorized variable valve, the solution injection means, and the microcontroller.

The power means can include a rechargeable battery for powering the motorized variable valve, the solution injection means, and the microcontroller, and a solar panel for recharging the rechargeable battery.

The rotary drive mechanism can include a bidirectional rotary motor and a gear train operatively connecting the bidirectional rotary motor to the sprinkler head nozzle.

The injection means can be provisioned by at least one pump having an inlet and outlet, the pump inlet being fluidly connected to the at least one container and the pump outlet being fluidly connected to the sprinkler head nozzle. A replaceable bottle can be provided for containment within the at least one container. The replaceable bottle can have a tube disposed therein for ingress of concentrated liquid solution stored within the bottle. A cap can be mounted on the replaceable bottle. The cap can have a tube disposed therein for fluid connection with the replaceable bottle tube, and the cap tube can be fluidly connected to the pump inlet.

The injection means can alternatively be provisioned by a piston mounted within the at least one container, wherein the at least one container is fluidly connected at an upstream end to receive water from the main water line and is fluidly connected at a downstream end to dispense concentrated liquid solution to the main water line or sprinkler head nozzle, and wherein concentrated liquid solution is stored between the piston and the downstream end. A second electronically controllable valve can be installed upstream of the upstream end of the at least container for regulating the amount of water flowing into the at least one container, the second valve being operated connected to the microcontroller for controlling the dispensation of concentrated liquid solution into the main water line or sprinkler head nozzle. The piston can have a puncture point for puncturing a sealing membrane of a solution refill bottle.

The sprinkler head spout can have an exit portion which, in operation, is disposed at a fixed angle relative to the ground. The sprinkler head spout can generate a water jet and the microcontroller can control the rotary drive mechanism to distribute the water jet over a geometric area representing a user-defined application zone.

The device can be calibrated to define and irrigate one more user-defined application zones by provisioning a web server and an application executing on a mobile device (mobile app) which communicates with the web server, wherein the microcontroller is configured to communicate wirelessly with at least the mobile app which also provides a user interface to the device, wherein a user can define an application zone by:
- (i) using the user interface to wirelessly communicate adjustments to the angular position of the sprinkler head spout and adjustments to the sprinkler head water jet throw distance, wherein in response to the requested adjustments the microcontroller varies the angular position of the sprinkler head nozzle and varies the position of the variable valve;
- (ii) repeating procedure (i) until the sprinkler head angular position and water jet throw distance are confirmed by the user via the user interface, whereupon the angular position of the sprinkler head spout and the pressure measured by the pressure sensor are memorized by the web server in association with a first corner of the application zone;
- (iii) repeating procedures (ii) in respect of at least two additional corners of the application zone, whereby a closed geometry can be determined representing the application zone;
- (iv) computing an irrigation path for irrigating the geometric area representing the application zone based on the memorized angular positions and pressures and storing the path at the server.

The device microcontroller can communicate with and periodically poll the web server to determine whether to irrigate or not. The web server can trigger the device to irrigate and communicates an irrigation path to the device microcontroller, wherein the web server dynamically computes the irrigation path for the user-defined application zone based on local weather data obtained by the web server.

The irrigation path can be represented as a series of arcs, each arc represented by control data including at least two of: sprinkler head nozzle rotational position, water pressure or water jet throw distance, sprinkler head rotational speed or motor duty cycle, sprinkler head rotational direction, and number of passes.

The control data communicated by the web server to the device can also include data for control of the solution injection means.

In another aspect, a system is disclosed for controlling yard maintenance at a plurality of sites. The system includes a web server and a yard maintenance device disposed at each of the sites. Each maintenance device includes a housing; a water supply coupling provided on the housing; a sprinkler head nozzle rotatably mounted in the housing; a rotary drive mechanism mounted in the housing and operatively connected to the sprinkler head nozzle for rotation of the sprinkler head nozzle; means for measuring a rotational position of the sprinkler head nozzle; a main water line conduit disposed in the housing for fluidly connecting the water supply coupling and the sprinkler head nozzle; a motorized variable valve disposed in the main water line conduit for adjusting the fluid flow therein; a pressure sensor for sensing pressure at or near the sprinkler head nozzle; at least one container for storing concentrated liquid solution, the at least one container being enclosed by the housing; solution injection means, connected to the at least one solution container and encased by the housing, for injecting concentrated liquid solution into the main water line or sprinkler head nozzle; a microcontroller operatively coupled to the angular position measurement means, the rotary drive mechanism, the pressure sensor, the motorized variable valve, and the solution injection means so as to (i) control an angular sweep of the sprinkler head spout through actuation of the rotary drive mechanism, (ii) control a sprinkler head water jet throw distance by controlling a position of the motorized variable valve, and (iii) control dispensation of liquid solution by controlling the solution injection means; and means for supplying electric power to drive the motorized variable valve, the solution injection means, and the microcontroller. A web-based application, executable in part by the server, the yard maintenance device, and a mobile device associated with and configured to wirelessly communicate with a given yard maintenance device, is provisioned for calibrating one or more application zones for the given yard maintenance device at a given site. The software application enables a given user to define each application zone by
- (i) employing a user interface on the mobile device to virtually adjust rotational position of the sprinkler head nozzle and adjust sprinkler head water jet throw distance, wherein in response to the requested adjustments the microcontroller associated with the given yard maintenance device varies the rotational position of the associated sprinkler head nozzle and varies the position of the associated variable valve,
- (ii) repeating (i) until the sprinkler head rotational position and water jet throw distance are confirmed by the user through the mobile device user interface, whereupon the rotational position of the sprinkler head nozzle and the pressure measured by the associated pressure sensor are memorized by the server in association with a first corner of the application area,
- (iii) repeating (i) to (ii) in respect of at least two additional corners of the application area, until a closed geometry can be determined representing the application zone, and
- (iv) computing an irrigation path for irrigating the geometry representing the application zone based on the memorized angular positions and pressures and storing the path in the server.

The software application enables the given user to specify a type of solution in each of the containers associated with the given yard maintenance device. The server determines a fertigation schedule and fertigation path for the given yard maintenance device, the fertigation schedule and the path being based in part on local weather data associated with the given site. The server dynamically signals the given yard maintenance device to commence irrigation and communicates the computed fertigation path thereto, the given yard maintenance device executing the computed fertigation path.

The mobile device user interface can enable the given user to establish, for each defined application zone, the type of zone, as selected from a list of predefined zones, and the fertigation schedule is determined based in part on the zone type.

The fertigation path can be represented as a series of arcs, each arc represented by control data including at least two of: sprinkler head nozzle rotational position, water pressure or water jet throw distance, sprinkler head rotational speed or motor duty cycle, sprinkler head rotational direction, and number of passes, and wherein control data includes data for controlling the solution injection means.

The server can track solution usage for user accounts.

### BRIEF DESCRIPTION OF DRAWINGS

The foregoing and other aspects of the invention will now be described in greater detail, by way of example only, with reference to the attached drawings, in which:
Figure 1 shows a mechanical system block diagram of a lawn or garden maintenance device in accordance with a first embodiment;
Figure 2 shows an electrical sub-system block diagram of the device shown in Figure 1;
Figure 3A is a sectional perspective view of the device shown in Figure 1;
Figure 3B is a sectional perspective view of a portion of the device shown in Figure 3A;
Figure 3C is an elevation view of another portion of the device shown in Figure 3A;
Figure 3D is a sectional elevation view of the portion of the device shown in Figure 3C;
Figure 4 is a schematic diagram which depicts refilling of the device shown in Figure 1 with concentrated liquid solution;
Figure 5 shows a mechanical system block diagram of a lawn or garden maintenance device in accordance with a second embodiment;
Figure 6 shows an electrical sub-system block diagram of the device shown in Figure 5;
Figure 7A is a perspective view of the device shown in Figure 5;
Figure 7B is a sectional elevation view of the device shown in Figure 5;
Figure 7C is an exploded perspective view of a portion of the device shown in Figure 5;
Figure 7D is a sectional perspective view of the portion of the device shown in Figure 7C;
Figure 7E is a sectional view of a component shown in Figure 7C;
Figure 8A is a perspective view of a solution refill bottle and its cap, which can be utilized with the device shown in Figures 7A-7E;
Figure 8B is a perspective view of the solution refill bottle shown in Figure 8A without the cap;
Figure 8C is a sectional perspective view of the solution refill bottle shown in Figure 8B;
Figures 9A, 9B and 9C are schematic diagrams which illustrate how the device shown in Figure 1 or Figure 6 can be calibrated by a user to spray within the confines of a user-defined area, using an app on a mobile device;
Figure 10 is an architectural block diagram of a lawn or garden maintenance system which utilizes a web server that communicates with the foregoing lawn or garden maintenance devices;
Figures 11A - 11H show an example of a set of user interface screens on the mobile device, which can be utilized to execute the calibration process shown in Figures 9A-9C;
Figures 12A - 12D show an example of a set of user interface screens on the mobile device, which can be utilized to enable a user to configure application settings for zones defined by the user; and
Figure 13 is a schematic diagram showing how an irrigation travel path can be computesd.

### DETAILED DESCRIPTION

For simplicity and clarity of illustration, where considered appropriate, reference numerals may be repeated among the Figures to indicate corresponding or analogous elements. In addition, numerous specific details are set forth in order to provide a thorough understanding of the embodiment or embodiments described herein. However, it will be understood by those of ordinary skill in the art that the embodiments described herein may be practiced without these specific details. In other instances, well-known methods, procedures and components have not been described in detail so as not to obscure the embodiments described herein. It should be understood at the outset that, although exemplary embodiments are illustrated in the figures and described below, the principles of the present disclosure may be implemented using any number of techniques, whether currently known or not. The present disclosure should in no way be limited to the exemplary implementations and techniques illustrated in the drawings and described below.

Various terms used throughout the present description may be read and understood as follows, unless the context indicates otherwise: "or" as used throughout is inclusive, as though written "and/or"; singular articles and pronouns as used throughout include their plural forms, and vice versa; similarly, gendered pronouns include their counterpart pronouns so that pronouns should not be understood as limiting anything described herein to use, implementation, performance, etc. by a single gender; "exemplary" should be understood as "illustrative" or "exemplifying" and not necessarily as "preferred" over other embodiments. Further definitions for terms may be set out herein; these may apply to prior and subsequent instances of those terms, as will be understood from a reading of the present description.

Modifications, additions, or omissions may be made to the systems, apparatuses, and methods described herein without departing from the scope of the disclosure. For example, the components of the systems and apparatuses may be integrated or separated. Moreover, the operations of the systems and apparatuses disclosed herein may be performed by more, fewer, or other components and the methods described may include more, fewer, or other steps. Additionally, steps may be performed in any suitable order. As used in this document, "each" refers to each member of a set or each member of a subset of a set.

Any module, unit, component, server, computer, terminal, engine or device exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the device or accessible or connectable thereto. Further, unless the context clearly indicates otherwise, any processor or controller set out herein may be implemented as a singular processor or as a plurality of processors. The plurality of processors may be arrayed or distributed, and any processing function referred to herein may be carried out by one or by a plurality of processors, even though a single processor may be exemplified. In particular, the term "server" is not indicative of a single processing unit but may encompass a cluster or cloud service that comprises multiple physical or virtual processing units, memories, databases, and/or storage devices. Any method, application or module herein described may be implemented using computer readable/executable instructions that may be stored or otherwise held by such computer readable media and executed by the one or more processors.

In this disclosure the following terms should be interpreted and understood in the following senses unless the context clearly dictates otherwise:
"solution" means any liquid fertilizer, nutrient, soil conditioning agent, herbicide, or pesticide that is or can be applied to any yard, grass lawn, flower bed, and/or fruit/vegetable patch;
"fertigation schedule" means the periodic timing of the application of irrigation water and/or solution(s); and
'water jet' means a single jet of water or a concentrated stream of water that can comprise a relatively compact bundle of individual jets.

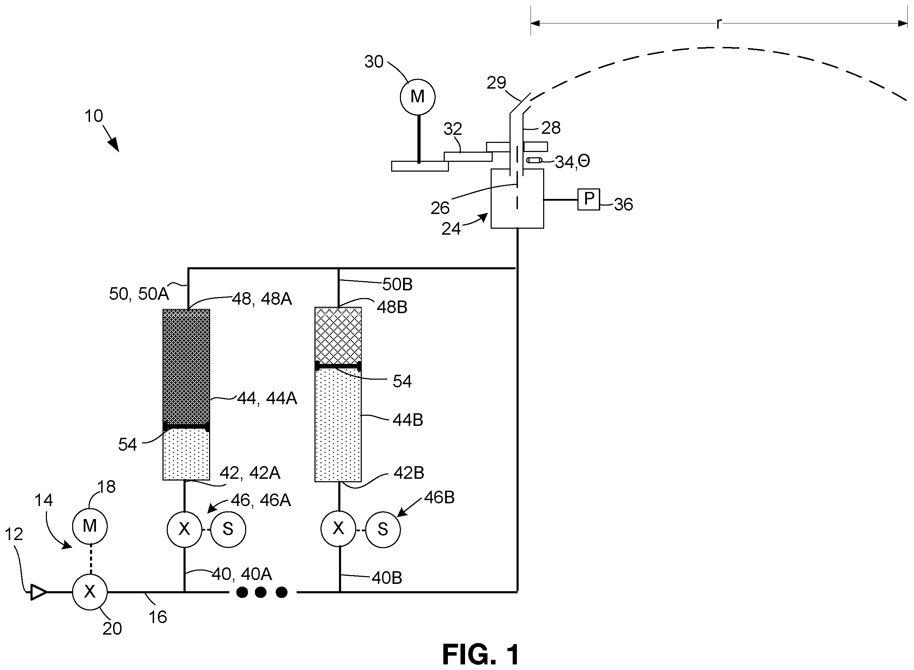

Figure 1 shows a mechanical system block diagram of an example of a lawn or garden maintenance device 10 in accordance with a first embodiment. For readability, the lawn or garden maintenance device 10 may be referred to more simply as device 10.

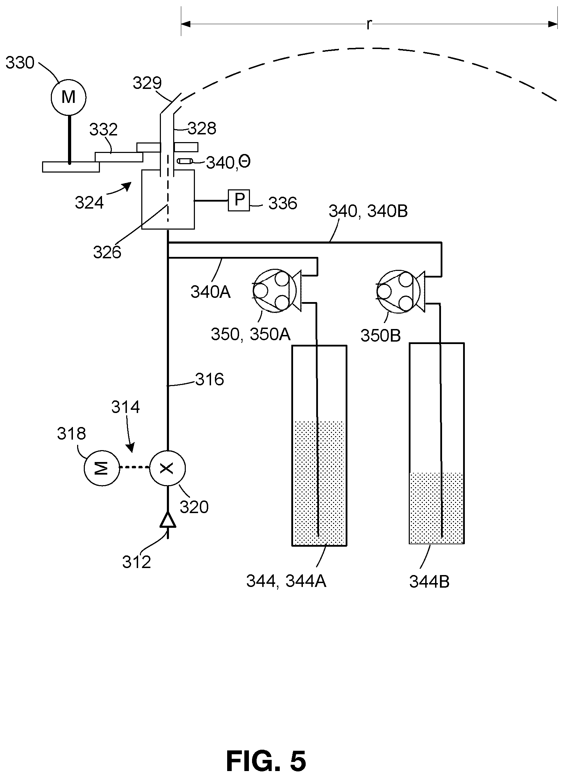

Figure 5 shows a mechanical system block diagram of another example of a lawn or garden maintenance device 300 in accordance with a second embodiment. For readability, the lawn or garden maintenance device 300 may be referred to more simply as device 300.

The devices 10 or 300 can communicate with a mobile smart device and/or a web server as discussed in greater detail below to form a lawn or garden maintenance system.

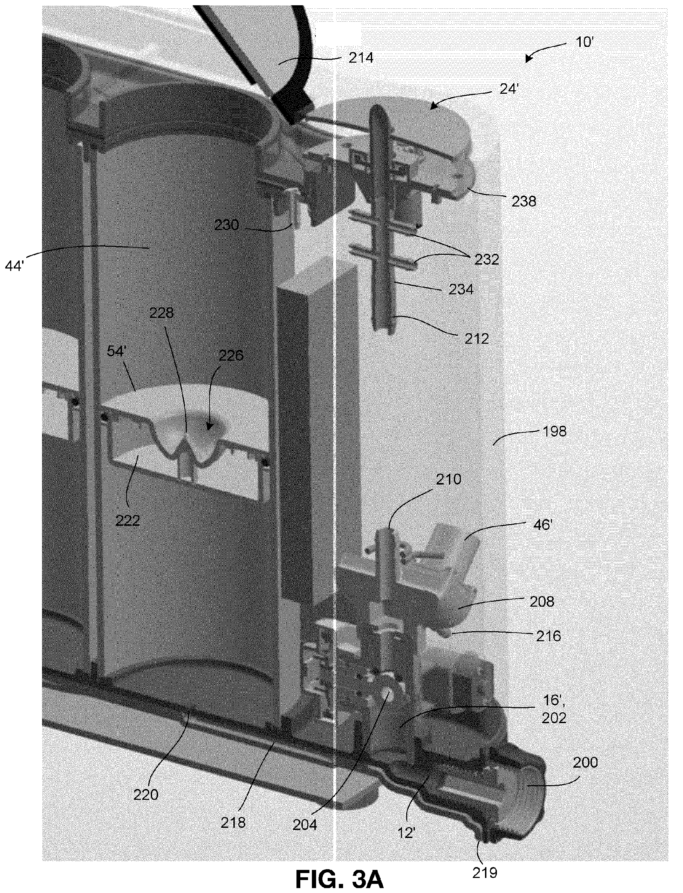

Referring in particular to Figure 1, the device 10 has an inlet 12 which can be connected to a hose end via conventional male/female garden hose screw threads (see thread 200 in Figure 3A) or other such hose coupling. The garden hose (not shown) is readily available to the homeowner to provide pressurized water from the municipality. Municipal water pressure varies, but is typically between about 40 psi (275790 Pa) and about 115 psi (792897 Pa). In practice, municipal water pressure will vary at different locations, or even at the same location at different times. The device 10 manages these variations as discussed below.

The inlet 12 is fluidly connected to a first controllable valve 14 via a first conduit 16. The controllable valve 16 is preferably a motorized ball valve, comprising a motor 18 and ball valve 20, as known in the art per se. The controllable valve 14 is used to establish and dynamically adjust the flow rate depending on water pressure and/or a target distance r for throw of a water jet, as discussed in greater detail below.

The device 10 has an outlet provided by a sprinkler head 24 that features a spout 28. The spout 28 has an exit portion 29 that is preferably orientated at a fixed angle of about 45 degrees (relative to a horizontal axis disposed perpendicular to a longitudinal axis 26 of the sprinkler head 24). In some embodiments the spout exit portion 29 can be angled at a different fixed angle, for example, an angle in the range of 30 to 60 degrees. In still other embodiments the spout exit portion angle may be adjustable and set by the user.

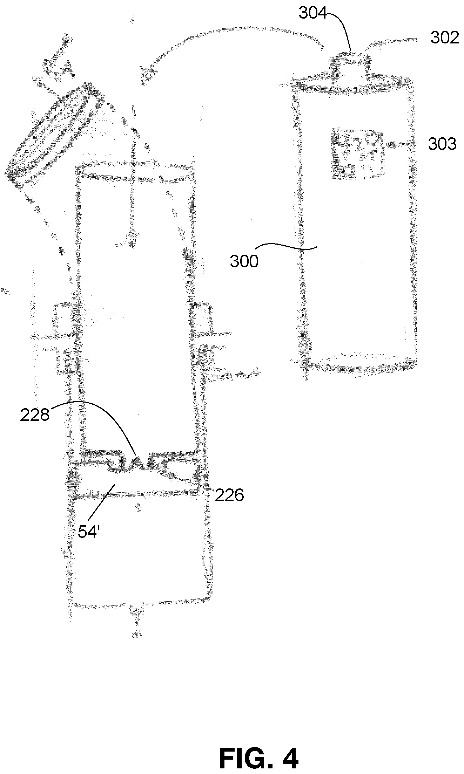

The spout 28 can be pivotally mounted in the sprinkler head 24 (see, for example, Figure 4C) and operatively connected to a bi-directional controllable rotary motor 30 via a gear train 32. The spout 28 can be operatively connected to an electronic angular position sensor 34, which measures an angular position θ of the spout 28, and an electronic pressure sensor 36, which measures water pressure at the spout 28 or sprinkler head 24.

In practice the spout angular position sensor 34 can be disposed to measure the angular position of the spout 28 per se, an output shaft of the motor 30, or any of the gears in the gear train 32, it being understood that the angular position at each of these locations will be related to one another through the rotational ratio provided by the gear train 32. Thus, means to measure the angular position of the sprinkler head spout 28 includes an angular position sensor mounted to sense an angular position θ of the sprinkler head spout *per se,* the motor output shaft, or any of the gears in the gear train connecting the motor shaft to the sprinkler head spout.

The first conduit 16, which is alternatively referred to herein as the main water line 16, extends to and is fluidly connected with the sprinkler head 24. The main water line 16 branches off into at least one secondary line 40 that supplies some water flow to an inlet 42 of at least one liquid lawn or garden solution container 44 via a solenoid valve 46. Each solution container 42 has an outlet 48 connected to an exit line 50 that is fluidly connected to the main water line 16 downstream of the junction(s) with the secondary line(s) 40. Figure 1 shows two solution containers 44A, 44B with inlets 42A, 42B supplied by two secondary lines 40A, 40B, respectively, and outlets 48A, 48B connected to two exit lines 50A, 50B, but it will be appreciated that the device 10 can include more than two secondary lines 40 and each secondary line 40 can supply water to more than one solution container 44.

Each solution container 44 can employ a floating piston 54 to separate incoming water from concentrated solution, which concentration will be higher than the application concentration when the solution is mixed with the water from the main water line 16. The floating piston 54 enables egress of concentrated solution through passive displacement, wherein, when the corresponding solenoid valve 46 is opened, incoming water under pressure displaces the consumable solution in a particular container 44 thus supplying the liquid solution to the corresponding exit line 50 and subsequently to the main water line 16 and the sprinkler head 24. With knowledge of the water pressure at or near the spout 28, the flow rate of a particular concentrated liquid solution can be estimated and the corresponding solenoid valve 46 can be controlled, for example, in a pulse width modulated manner, to set the application concentration of the solution at the spout 28.

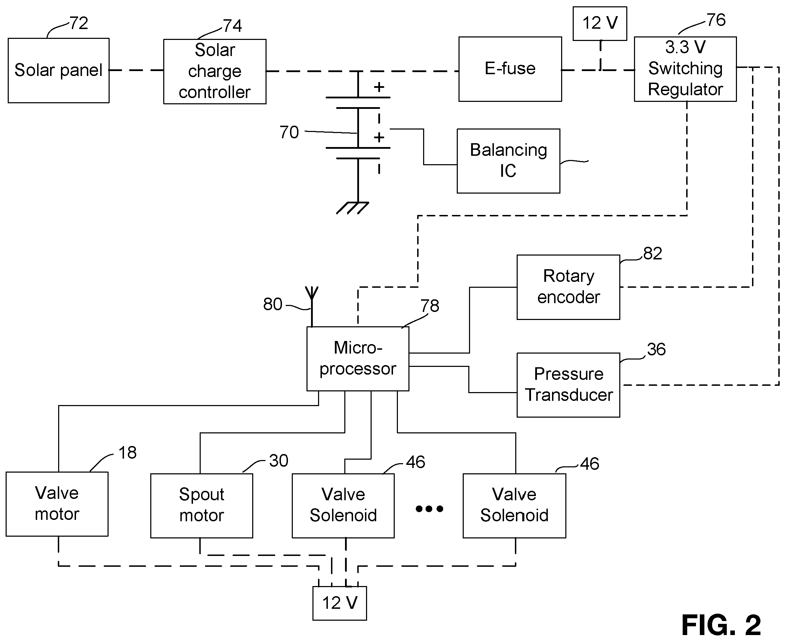

Figure 2 is an electrical sub-system block diagram showing an example of an electrical power and control subsystem for the device 10. The device 10 can include a rechargeable battery 70 that can be recharged via a small solar panel 72 via a solar charge controller 74. A DC-to-DC converter such as a switching regulator 76 can convert battery voltage to a lower voltage needed to power logic components. Other power sources, such as an external power supply, can be provisioned in the alternative. The logic components can include a microcontroller 78 with internal memory and embedded WIFI^{™} and Bluetooth^{™} capability for processing such wireless signals via an antenna 80. The microcontroller 78 can be operatively connected to the spout angular position sensor 34, such as provided by magnetic rotary encoder 82. The microcontroller 78 is also operatively connected to control the spout rotational motor 30, the controllable valve motor 18, and the valve solenoids 46.

The device 10 can provide relatively accurate watering and/or application of lawn or garden solution by controlling (i) the angular sweep of the sprinkler head spout 28, and (ii) the water jet throw distance r.

As the sprinkler head spout 28 preferably has a predetermined angle relative to the horizon, the water jet throw distance r is dependent on the mass flow rate or speed of the water jet as it leaves the spout 28. The water jet speed is dependent on the pressure at the spout 28, which is controlled by an opening size, %open, of the controllable valve 14. The spout 28 preferably has a cross-sectional dimension that is optimized for a maximum throw distance under typical municipal water pressure when the %open is 100%. As the %open of the controllable valve 14 becomes smaller, the water mass flow rate through the device 10 decreases, the pressure at the spout 28 decreases, and the water jet throw distance r becomes smaller. The relationship(s) of water throw jet distance r and/or water mass flow rate as a function of spout pressure and/or %open can be predetermined in a controlled environment and maintained in the form of a graph or map stored in the microcontroller memory or alternatively dynamically computed by the microcontroller 78 utilizing a fluid dynamic model of the device 10 stored in the microcontroller memory. Changes in municipal water pressure will, without mitigation, affect the water jet throw distance r but with the water pressure being measured at or near the spout 28 the %open can be dynamically adjusted in a feedback loop to achieve a target spout pressure correlated to a target water jet throw distance r.

Figures 3A - 3D show an example 10' of the device 10, referred to herein for readability as device 10', in various cross-sectional portion views. For ease of understanding, not all internal conduits are explicitly shown.

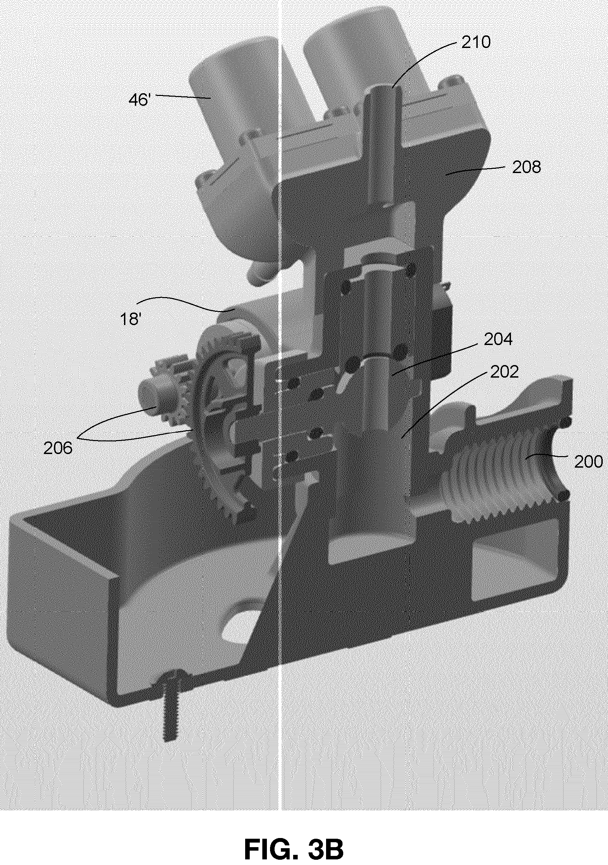

The device 10' features a casing 198 which provides an inlet 12', including a female garden hose coupling 200. The inlet 12' is fluidly connected to a pipe 202 which provides a portion of a main water line 16'. A ball valve 204 is mounted in the pipe 202. The ball valve 204 is connected to a motor 18' (seen best in Figure 3B) via a motor reduction gear train 206.

Downstream of the ball valve 204, the pipe 202 is fluidly connected to a plenum 208. The plenum 208 has an outlet 210 that provisions a continuation of the main water line 16'. A tube (not shown) connects the outlet 210 with an inlet 212 of a sprinkler head 24'.

The device 10' as shown features four solution containers 44' disposed within the device casing 198. A cover 214 is hinged to the casing 198 to allow user access to the containers 44'.

The plenum 208 features four outlets 216 (only one of which is shown in the cross-sectional views), each of which is fluidly connected to a corresponding one of the containers 44'. A solenoid valve 46' controls these fluid connections in a digital open/closed manner.

Each container 44' can include a small aperture 220 at a bottom face of the container. The aperture 220 can be fluidly connected to a channel 218 formed or otherwise provisioned at the bottom of the casing 198, which leads to the plenum 208 and one of the outlets 216 (the full fluid paths to all containers is not shown).

A floating piston 54' is disposed within each container 44'. The floating piston 54' can have a relatively thick axial extent, with a substantially hollow interior 222, which aids in the mechanical strength of the piston body. An O-ring 224 can be installed at the edge of the floating piston 54' to provide a sliding seal between water and concentrated liquid solution.

For greater certainty, it will be understood that the solution may itself be a pure liquid form of the ingredient, or a solution having a selected concentration level, or a suspension of a selected ingredient (either as a liquid or as a particulate) in a medium such as water. In all cases, the solution may be referred to as a liquid solution.

The floating piston 54' can also include a bottle neck seat 226 with a puncture point 228.

Referring additionally to Figure 4, in use, the user can obtain (e.g. by purchasing) a refill bottle 300 of solution which features a bottle neck 302 whose opening is sealed by a membrane 304 such a plastic or foil sheet.

The refill bottle 300 of liquid solution can include a digital code, such as a QR code 303, which may be scanned by a mobile device and communicated to the device microcontroller to provide application information, as described in greater detail below. The QR code can provide information such as the type of solution or solution, specific variant, concentration, application rate, and other such application parameters.

To fill a container 44' with concentrated liquid solution, the user can place the bottle neck 302 into the piston seat 226, whereby the point 228 punctures the membrane 300. As the container 44' requires a refill, the floating piston 54' will likely be at its topmost position in the container 44', with water underneath. The user would need to push the floating piston 54' downward in order fill the container 44' with liquid solution. The force required for this push forces any remaining water under the floating piston 54' to exit via the sprinkler head spout. The magnitude of the pushing force required is such that there will be little leakage of liquid solution with the bottle neck 302 seated in the piston seat 226 until the user removes the bottle neck 302 from the piston seat 226, which will occur when the floating piston 54' is manually repositioned to its starting point at the bottom of the container 44' leaving maximum room in the container 44' for storage of the concentrated liquid solution.

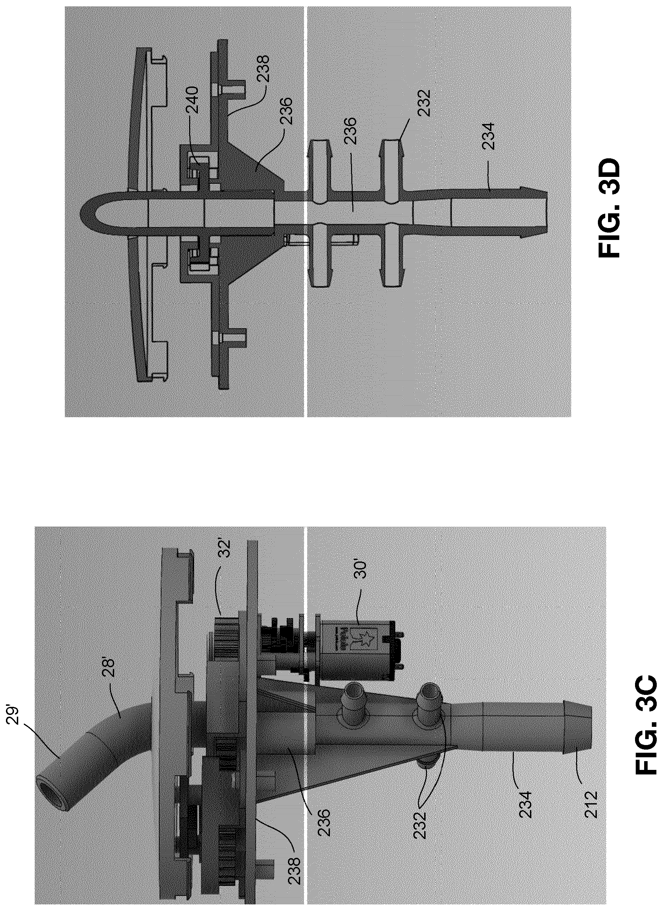

Referring to Figure 3A, each container 44' has an outlet 230 which is fluidly connected via a tube (not shown) to an inlet 232 in the sprinkler head 24' that forms a junction with a sprinkler head inlet pipe 234. As seen best in the cross-sectional diagram of Figure 3D, the sprinkler head inlet pipe 234 has a narrower cross-section about the container inlets 232 to provide a Venturi-like effect to aid in the ingress of fluid from the container inlets 232.

As seen best in Figure 3C and 3D, the sprinkler head inlet pipe 234 terminates in a bulbous portion 236 which spreads into a mounting flange 238. The bulbous portion 236 seats a pivotable spout 28' having angled exit portion 29'. The pivotable spout 28' includes (e.g. by being formed with or having otherwise affixed thereto) an external drive gear 240 that engages a gear train 32' connected to a rotary motor 30'. As seen best in Figure 3C, the mounting flange 238 functions as a support for mounting the rotary motor 30' and the gear train 32'.

Figure 5 shows device 300 in accordance with the second embodiment.

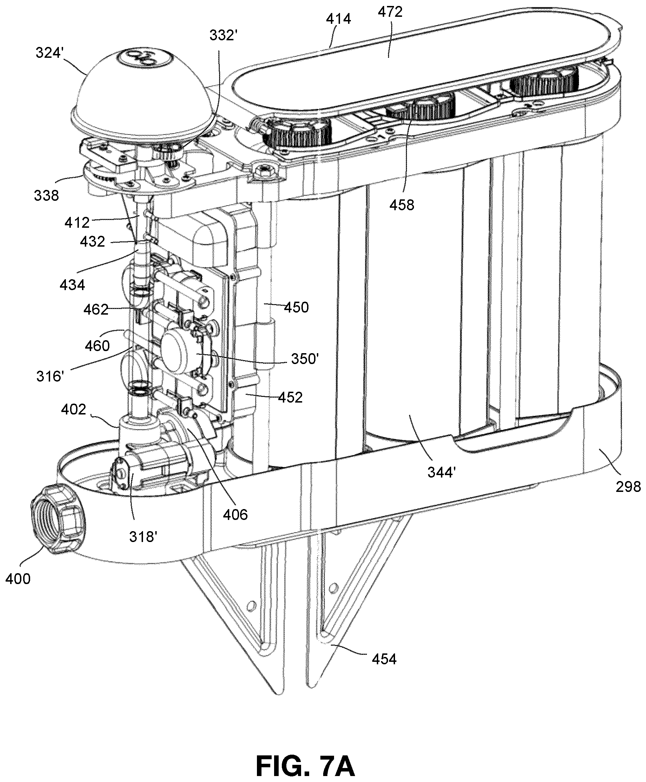

Device 300 has an inlet 312 which can be connected to a hose end such as via conventional male/female garden hose screw threads (see Figure 7A) or other such hose coupling. The inlet 312 is fluidly connected to a first controllable valve 314 via a first conduit 316. The controllable valve 314 is preferably a motorized ball valve, comprising a motor 318 and ball valve 320, as known in the art per se. The controllable valve 314 is used to establish and dynamically adjust the flow rate depending on water pressure and/or a target distance r for throw of a water jet.

The device 300 has an outlet provided by a sprinkler head 324 that features a spout or nozzle 328. The nozzle 328 has an exit 329 that is preferably orientated at a fixed angle of about 45 degrees (relative to a horizontal axis disposed perpendicular to a longitudinal axis 326 of the sprinkler head 324). In some embodiments the nozzle exit 329 can be angled at a different fixed angle, for example, an angle in the range of 30 to 60 degrees. In still other embodiments the nozzle exit angle may be adjustable and set by the user.

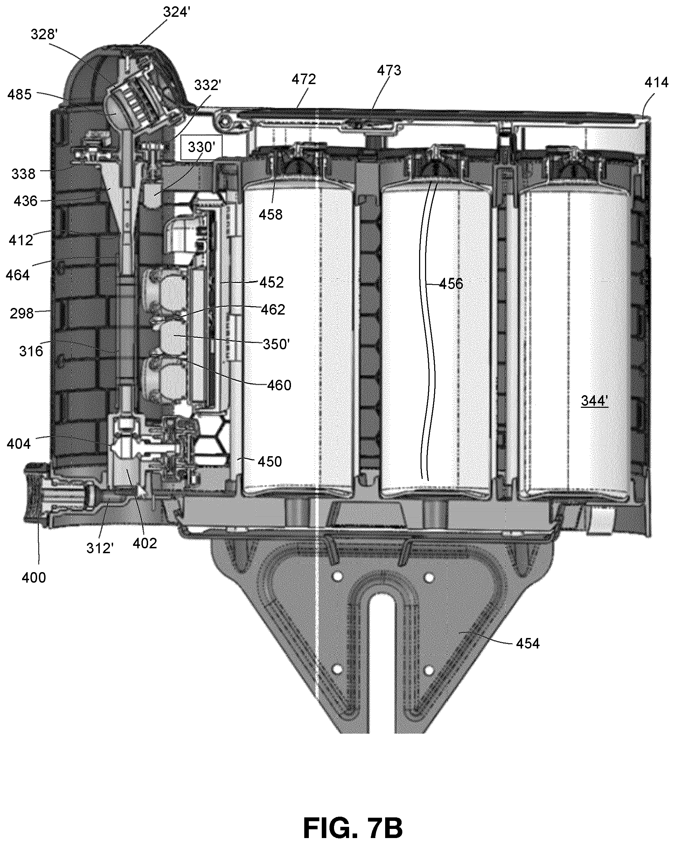

The nozzle 328 can be pivotally mounted in the sprinkler head 324 (see, for example, Figure 7B) and operatively connected to a bi-directional controllable rotary motor 330 via a gear train 332. The nozzle 328 can be operatively connected to an electronic angular position sensor 334, which measures an angular position θ of the nozzle 328, and an electronic pressure sensor 336, which measures water pressure at the nozzle 328 or sprinkler head 324.

In practice the nozzle angular position sensor 334 can be disposed to measure the angular position of the nozzle 328 per se, an output shaft of the motor 330, or any of the gears in the gear train 332, it being understood that the angular position at each of these locations will be related to one another through the rotational ratio provided by the gear train 332. Thus, means to measure the angular position of the sprinkler head nozzle 328 includes an angular position sensor mounted to sense an angular position θ of the sprinkler head nozzle *per se,* the motor output shaft, or any of the gears in the gear train connecting the motor shaft to the sprinkler head nozzle.

The first conduit 316, which is alternatively referred to herein as the main water line 316, extends to and is fluidly connected to the sprinkler head 324. The main water line 316 can be fed liquid concentrate solution by least one concentrate injection line 340 supplied from at least one lawn or garden liquid solution container 344. A positive displacement pump, preferably a peristaltic pump 350, is utilized to dose concentrate liquid solution to the main water line 316. Figure 5 shows two solution containers 344A, 344B supplying two injection lines 340A, 340B via two peristaltic pumps 350A, 350B, respectively, but it will be appreciated that the device 300 can include more containers, injection lines, and pumps.

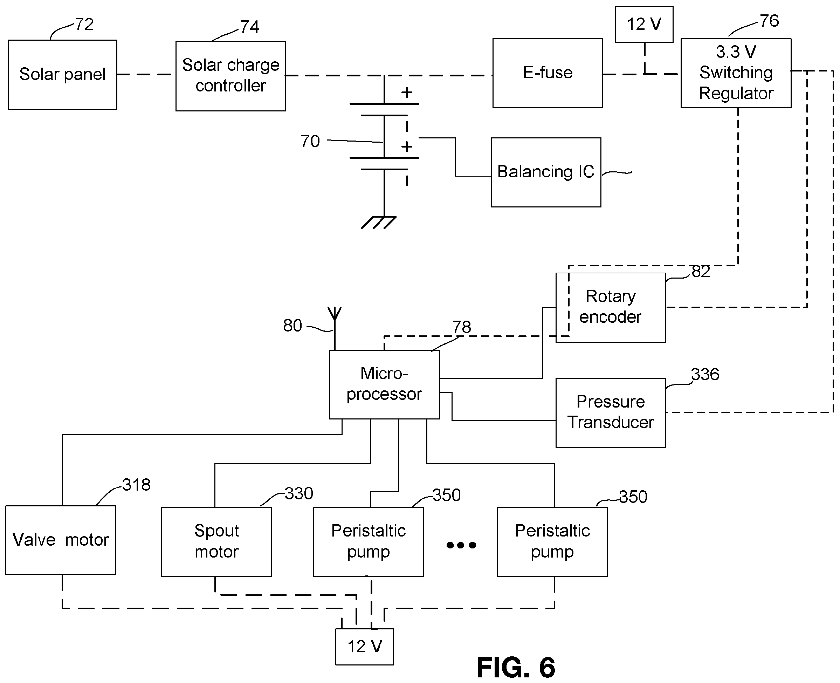

Figure 6 is an electrical sub-system block diagram showing an example of an electrical subsystem for the device 300. The device 300 can include rechargeable battery 70 that can be recharged via small solar panel 72 and solar charge controller 74. A DC-to-DC converter such as switching regulator 76 can convert battery voltage to a lower voltage needed to power logic components. Other power sources, such as an external power supply, can be provisioned in the alternative. The logic components can include microcontroller 78 with internal memory and embedded WIFI^{™} and Bluetooth^{™} capability for processing such wireless signals received via antenna 80. The microcontroller 78 can be operatively connected to the nozzle angular position sensor 334 such as provided by magnetic rotary encoder 82. The microcontroller 78 is also operatively connected to control the nozzle rotational motor 330, the controllable valve motor 318, and the peristaltic pumps 350.

The microcontroller 78 controls the voltage applied to the peristaltic pump 350, which controls the pump revolution rate and hence the flow rate. The microcontroller 78 also controls the valve motor 318, which controls the flow of water. Through control of these operating parameters the microcontroller 78 can control (and compute) the dilution of the lawn or garden concentrate solution.

The device 300 can provide relatively accurate watering and/or application of lawn or garden solution by controlling (i) the angular sweep of the sprinkler head nozzle 328, and (ii) the water jet throw distance r, as described previously with respect to device 10.

Figures 7A-7E show an example 300' of the device 300, referred to herein for readability as device 300', in various views. For ease of understanding, not all internal conduits or tubing are explicitly shown.

The device 300' features a casing 298 (most of which is omitted from view in Figure 7A) which provides an inlet 312', including a female garden hose coupling 400.

The device 300' as shown features three liquid concentrate solution containers 344' disposed within the device casing 298. A cover 414 is hinged to the casing 298 to allow user access to the containers 344'. The cover 414 includes a solar panel 472 and associated printed circuit board (PCB) 473. Two spaced apart posts 450 are mounted in the casing 298 for structural support thereof as well as for mounting a sealed enclosure 452 which encapsulates an electronic control board and rechargeable batteries (not explicitly shown). A releasably attached stake 454 is provided for securing the casing 298 in the ground or against a vertical mounting surface; thus, the device 300 can be conveniently mounted in an unobtrusive location such as the sidewall of a house or garage or fence.

The inlet 312' is fluidly connected to a pipe 402 which provides a portion of a main water line 316'. A ball valve 404 (seen best in the cross-sectional view of Figure 7B) is mounted in the pipe 402. The ball valve 404 is connected to a motor 318' (seen best in Figure 7A) via a motor reduction gear train 406. Downstream of the ball valve 404, the main water line 316' connects to an inlet 412 of a sprinkler head 324'.

The containers 344' each have portions of tubes 456 respectively disposed therein for drawing concentrate. The tubes 456 are held by container caps 458 and run to inlets 460 of peristaltic pumps 350'. (Tubes 456 are not shown in their entirety.) Each peristaltic pump 350' has an outlet 462 that is fluidly connected via tubing (not shown) to an inlet 432 (seen best in Figure 7A) in a sprinkler head inlet pipe 434. The sprinkler head inlet pipe 434 can have a narrower cross-section about the container inlets 432 to provide a Venturi-like effect to aid in the ingress of fluid from the container inlets 432.

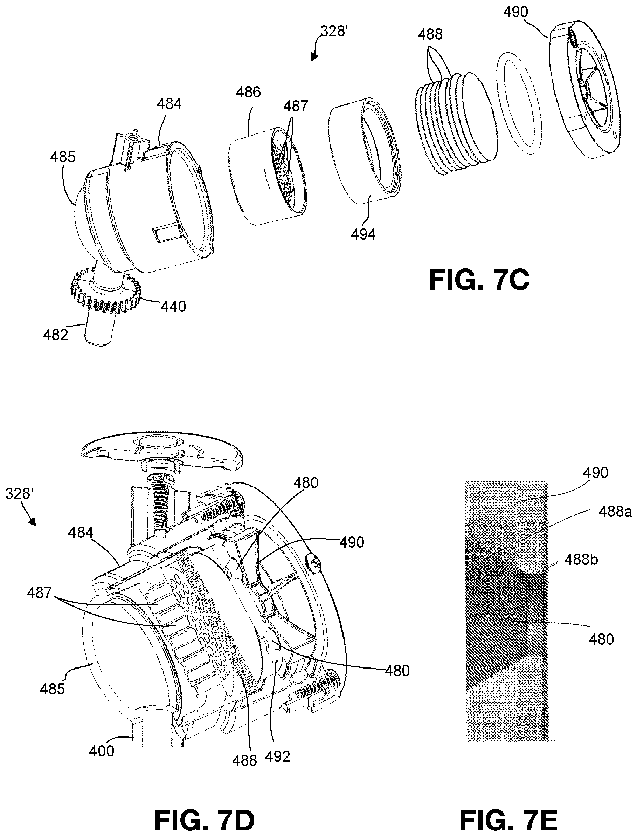

The sprinkler head inlet pipe 434 terminates in a bulbous portion 436 (seen best in Figure 7B) that seats a pivotable nozzle 328'. The pivotable nozzle 328' is formed with or otherwise fixed to an external drive gear 440 (seen best in Figure 7C) that engages a gear train 332' connected to a rotary motor 330' (seen best in Figure 7B). A mounting flange 338 functions as a support for mounting the rotary motor 330' and the gear train 332'.

Referring particularly to the exploded and cross-sectional views of the pivotable nozzle 328' in Figures 7C and 7D, the nozzle 328' can be constructed to induce laminar flow in a plurality of individual water streams arising from multiple exit holes 480, so as to produce a distributed water jet which would have less forceful impact when hitting the ground in comparison to a non-distributed or solid jet. More particularly, the nozzle 328' includes a pipe portion 482, a casing portion 484, and a plenum 485 disposed between the pipe portion 482 and the casing portion 484 at a position where water flow changes direction leaving the pipe portion 482. The casing portion 484 houses a straightener 486 comprising a plurality of tubules 487, a stacked series of wire meshes 488, and an exit platen 490 which, on its upstream end, presents a plate-like portion 492 from which the multiple exit holes 480 commence. As seen best in the magnified isolated, cross-sectional view of Figure 7E, the exit holes 480 can each have a converging portion 488a and an end portion 488b. It has been found that, by keeping the length of the end portion 488b small, the performance of the exit platen 490 is improved. It is theorized that this arises from having relatively low shear forces on the liquid passing therethrough. The end portion 488b in the example shown in Figure 7E has a length of about 0.5 mm, however, any other length that is suitable could be provided.

A spacer 494 is disposed between the stack of meshes 488 and the exit platen 490 to maintain a predetermined spacing therebetween.

It was challenging to develop a laminar flow nozzle having a relatively short length, and it was found that the forgoing construction yielded generally good results: The plenum 485 provides a water accumulation segment. As an example, the plenum has a diameter of about 30 mm, and a length of about 6.5 mm of straight section upstream from the straightener tubules 487. The straightener serves to grossly channel and align water flow via the plurality of tubules 487. In the example, shown, about sixty tubules 487 are provided, each having a diameter of about 2 mm, however any other suitable number of tubules may be used, each having any suitable diameter. It has been found that, without the wire meshes 488, in a particular embodiment, a developed length of about 260 mm would have been needed to develop a purely laminar flow. However, providing the wire meshes 488 greatly reduces this required length, to a length of about 6 mm. About 5-15 wire meshes 488 can be employed to develop laminar flow, each mesh having a screen size in the range of about 0.05 - 1 square mm; the example shown utilizes about ten meshes each having a mesh size of 0.2 square mm. The spacer 494 spaces the meshes 488 and the exit platen 490 in a range of about 2 - 8 mm, preferably about 5 mm. The spacing is believed to not interfere with the action of the meshes whilst being short enough to reduce the likelihood of remerging turbulent flow due to conduit friction.

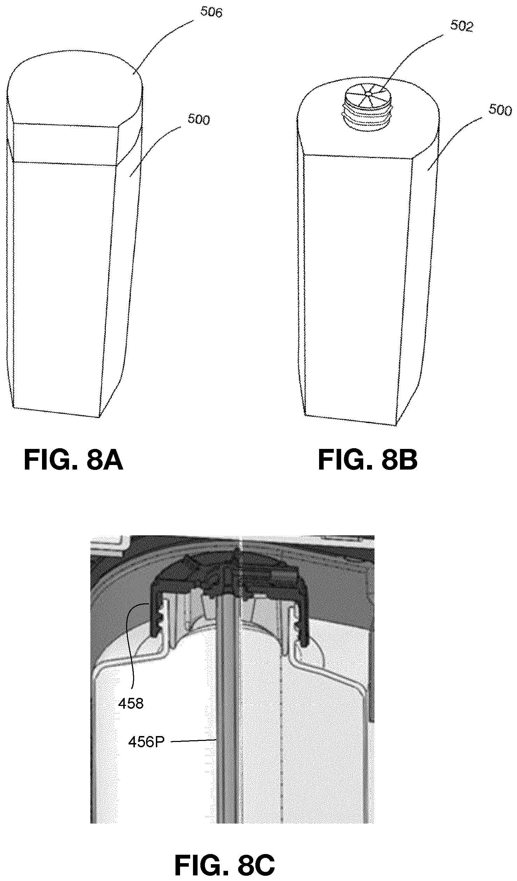

Referring additionally to Figures 8A, 8B and 8C, in use, the user can obtain (e.g. by purchasing) a refill bottle 500 of solution, which bottle includes a fitting 502 at the top thereof that is connected to a tube 456P pre-disposed in each refill bottle 500. The user can unscrew a shipping cap 504 (Figure 8A) from the refill bottle 500, place the refill bottle 500 in the device 300', and screw on the cap 458 that has tubing (not shown) attached and routed permanently to the corresponding peristaltic pump inlet 460 (not shown in Figures 8A - 8C). The cap 458 has a barb 506 that seals on the "fitting" pressed in every refill bottle 500 to allow the concentrate to be drawn up from the refill bottle 500. In this manner the user can avoid having to touch tubing covered in solution.

The solution refill bottle can include a digital code, such as a QR code, that may be scanned by the mobile device and communicated to the device microcontroller and/or central server to provide application information. The QR code can provide important information such as the type of solution or solution, specific variant, concentration, application rate, and other such application parameters.

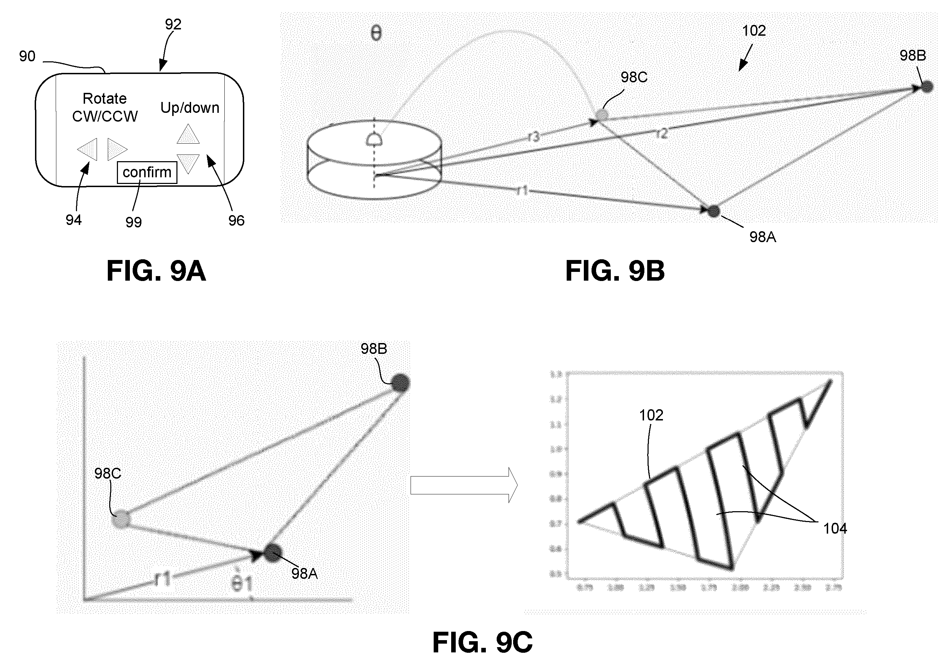

To irrigate a particular section of a lawn or garden, the device 10 or 300 can undergo a calibration set-up process. Referring additionally to Figures 9A - 9C, the set-up process can employ a smart phone or other such Bluetooth^{™} enabled device 90 which includes a sprinkler calibration app 92. Using the app 92, a user can identify corners of a lawn or garden area - generally referred to herein as the 'application area' or zone - that he or she wishes to maintain. The system can then automatically compute the perimeter of the application area and control the water jet throw distance r and the rotational directional of the sprinkler head spout 28 to adjust its angular sweep so as to spray the application area along a computed watering path.

For the set-up process, the app 92 can utilize virtual angular direction buttons 94 for directing microcontroller 78 to adjust the angular position of the sprinkler head spout 28 or 328 as well as virtual up/down buttons 96 to adjust the throw distance r. The user can manipulate these virtual controls until the water jet hits a corner 98 of the application area or zone, at which point the user engages a virtual confirmation button 99 within the app 92 and the microcontroller 78 of the device 10 or 300 memorizes the sprinkler head spout angular position θ, the pressure at the spout 28 and optionally the %open position. The process is repeated for all corners 98 until an application area or zone 102 is defined. In the illustrated example of Figure 9B, there are three corners 98A, 98B, 98C which delineate a triangular application area.

If desired, the app 92 can also present to the user, either prior to or after the corner throw distances are established, a list of geometric shapes such as circular, triangular, rectangular, pentangular, etc., in order to assist in the automatic determination of the perimeter of the application area or zone 102. Once the perimeter of the application area or zone 102 is defined, the app 92 or device microcontroller 78, or more preferably a web server as discussed in greater detail below, can compute a watering pattern 104, taking into account factors such as typical variability in the spread of the water jet relative to throw distance, the power consumption required by the rotary motor(s), solenoid valves 46, and/or pumps, as well as water usage.

When the device 10 or 300 is anchored or otherwise physically fixed at a particular location, once the set-up process is complete, the system can repeatedly irrigate and/or apply lawn or garden solutions to the application area or zone 102. Changes to the municipal water pressure will be automatically accounted for through the feedback mechanism discussed above that will dynamically adjust %open to achieve the required water jet throw distance r for the computed watering pattern 104.

It should be appreciated that the system enables the app 92 to establish multiple application areas or zones 102, each of which can be configured for different solution application rates. For example, the system could readily enable a 'lawn zone' or a 'garden zone' to be configured, each of which can be programmed for different types, concentrations and/or frequencies of solution applications.

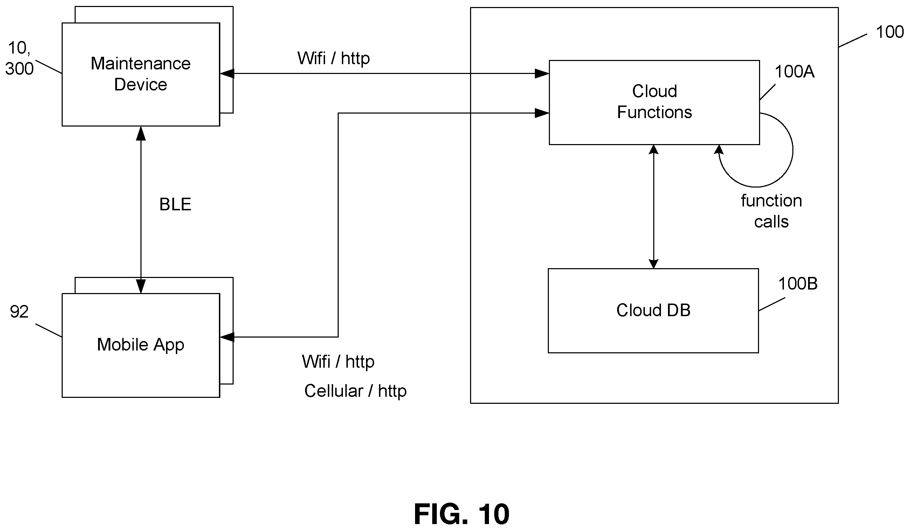

Figure 10 shows an architectural system diagram of a lawn or garden maintenance system 8 which includes three major components: a web server 100; device 10 or 300 (the system typically comprising a plurality of such devices); and mobile device application 92 (the system comprising numerous instantiations of the app for communicating with devices 10 or 300). The web server 100 can include a customer facing interface that provides cloud functions 100A via application programming interfaces (APIs) stored in the server and a cloud database 100B such as the Firestore^{™} database offered by Google Inc.

The components of system 8 can interact through the communication protocols shown in Fig. 10. The device 10, 300 is shown to communicate with the web server 100 through WiFi but it will be understood by persons skilled in the art that the device 10, 300 must first be connected to a local wireless network (not explicitly shown) such as a home LAN network as known in the art per se which can provide Internet access to the device 10, 300, thus enabling communication between the web server 100 and device 10, 300. Similarly the mobile app 92 which executes on a mobile device 90 can communicate with the web server 100 via the local network WiFi or alternatively through cellular phone protocols.

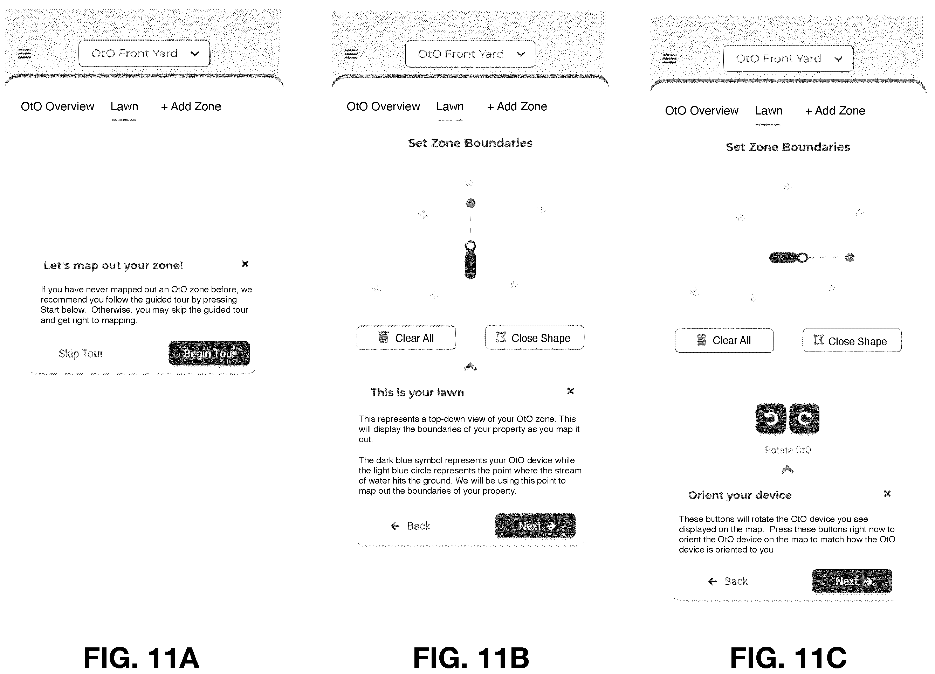

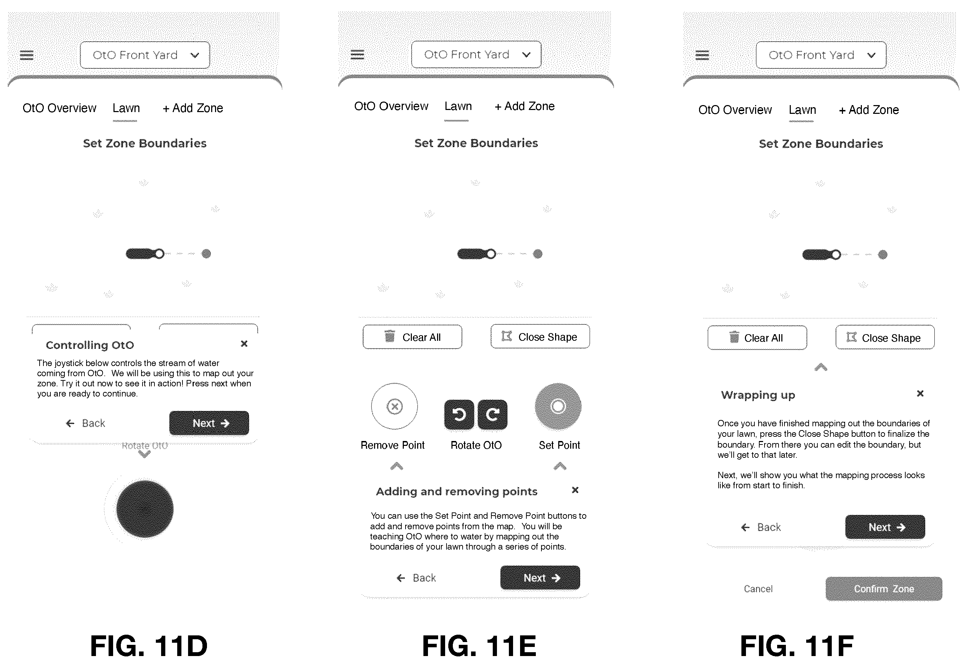

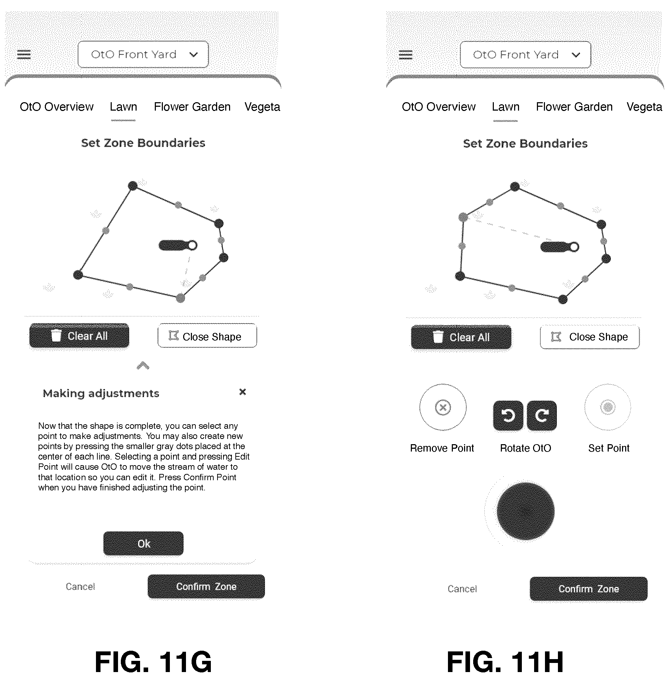

On BLE connection the microcontroller 78 can wait for commands via Bluetooth to control spray position for the calibration process and relays back to the mobile app 92 on the device 90 rotational position and pressure. This information is communicated back to the web server 100 once the calibration process is completed. Figures 11A - 11H show an example of user interface screens that can be provisioned by the mobile app 92 in order to execute the calibration process such as schematically shown in Figures 9A - 9C. In these illustrations the device/system is referred to by its trade name "OtO". These user interface screens should be self-explanatory.

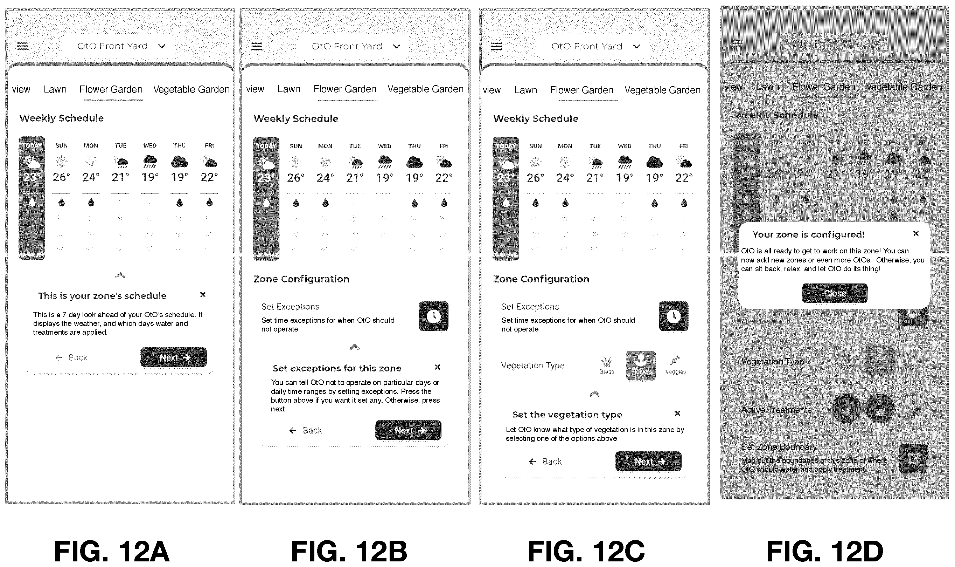

The web server 100 can maintain an account for each user, including address or geographical location, contact information, geometries of user-defined application areas 102, and types of areas 102 or zones. Figures 12A - 12D shown an example of user interface screens available through the mobile app 92 that enables a user to configure application settings for the application area(s) or zone(s) defined by the user. The configuration data can include:
- User-defined name for zone;
- type of zone (for example, from predefined list such as lawn, flower garden, vegetable garden, shrubs)
- vegetation type (for example, from predefined list such as grass, flowers, vegetables, shrubs)
- dynamic irrigation schedule, based on local weather forecast
- user-defined exceptions to irrigations schedule
- type of treatments/solutions desired and/or installed in the device 10,300
- application area geometrical configuration

With this information, the web server 100 can set irrigation, fertilization, and/or herbicidal application schedules and send triggers to the device 10,300 based on local seasonal conditions and/or rainfall patterns. Thus, lawn and/or garden maintenance can be a 'set and forget' activity in that once the lawn maintenance device 10,300 is mounted and set up the user needs to do very little additional work over the lawn and/or gardening season.

The web server 100 can serve users a web page with summary information concerning the user's account. For example, the web server can track the user's use of lawn or garden solutions and prompt the user via email or other known messaging techniques to replenish the solutions. Advantageously, the data tracking abilities of the web server can be used to establish a subscription service where solution replenishments are automatically delivered to the homeowner based on the web server's tracking of solution usage.

The ability of the system to connect to a web server also enables the possibility of wireless system software updates.

In one embodiment of the system 8, the device 10, 300 can be a relatively low cost "Internet-of-Things" device that does not require much electrical or computational power. The microcontroller 78 can be a relatively low cost component which can perform sleep/wake cycles every few (e.g., five) minutes. During a wake cycle a given microcontroller 78 can read information (e.g., battery status, charging status etc...) from its connected components or sensors, poll the Bluetooth^{™} (BLE) channel, and transmit a "unit call" message to the web server 100, as described in greater detail below, and include data objects in the message (e.g., in JavaScript Object Notation - JSON) representing the component or sensor data. The web server 100 can parse the unit call message via a Unit Call function and reply to the microcontroller 78 with information that includes whether or not the microcontroller should perform an over the air update (OTA) or if the corresponding device unit should irrigate and/or fertigate, and if so, provision an irrigation or fertigation path. The irrigation or fertigation path can be communicated in a variety of protocols. In one example, the path data comprises an array of five variables that represent one arc of travel; the array comprising a plurality of travel arcs :
- the throw distance r, which can be provided as pressure required at the sprinkler head;
- rotational or angular position;
- direction, for example clockwise or counterclockwise
- duty cycle of the sprinkler head rotational motor, which controls its speed; and
- pass count.

If path data is communicated, the device can then execute the irrigation or fertigation path. The irrigation and/or fertigation schedule and the pattern or path is not stored locally on the unit; the only data stored by the device 10, 300 can be the WiFi credentials set by the user.

The cloud database 100B can store all data for the app 92, device 10, 300 and cloud functions 100A. Stored data can include schedules, weather, unit information, user information and solution bottle data, on a per account basis.

The app 92 can be configured to display data from the cloud database 100B. Such data can include weather, schedule, solution identification (such as bottle SKUs) and unit status. The app 92 can connect over BLE to a device to test paths, change WIFI credentials stored on the unit and to perform calibration. As discussed previously, during calibration the user can control the landing location of the water jet exiting the device 10, 300 and the app 92 can receive back the rotational position of the sprinkler head and the pressure of the water flow. When the user sets a corner point the app 92 can record the rotational position and pressure data and push an array of these two values to the cloud database 100B. The app 92 can then trigger a path generation function provisioned by the cloud functions 100A to create a watering path within these indexes.

The cloud functions 100A can include the following:
- Initialize Database - called by the mobile app 92 anytime a section in the database 100B needs to be created for a user, a unit, or a zone.
- Path Generation - called by the mobile app 92 every time a user defines a new zone.
- Return Data - called by the mobile app 92. Retrieves data that is relevant to the app and returns it in a succinct data format (such as JSON). Data can include weather, schedule, time and day restrictions as well as user data
- Unit Call -triggered via receipt of message from a device unit 10, 300. This function updates the cloud database 100B with data from the unit (did it complete the watering cycle, an OTA update, the current battery voltage, solar charge current, etc...) and returns to the device unit 10, 300 data (e.g., in the form of a JSON) including a Boolean and several data arrays. The Boolean tells the device unit 10, 300 if it should water or not and the data arrays describe the path, as described above, to follow if the unit does so. The arrays are stored in the cloud database 100B and are updated by other cloud functions. The Unit Call function also calls a Scheduler function and a Weather function to ensure that the weather and scheduler data is always accurate within a few (e.g., five) minutes.
- Weather - triggered by the Unit Call function. Updates several weather arrays relevant to the app 92 and other cloud functions. Data such as rain/wind/chance of precipitation forecast as well as history can all be recorded
- Scheduler - triggered by the Unit Call function. Looks at the weather data in the database 100B and determines how much to water based on past evapotranspiration and precipitation quantities. Also determines an irrigation and/or fertigation schedule based on certain user restrictions. Will set the database Boolean that determines if the unit should water or not within 5 minutes of the set time.
- Pass Count and Duty Cycle - called by the Scheduler when it determines the unit should water. Generates new duty cycles for the sprinkler head rotational motor (which controls motor speed) and pass counts for each arc. This is dependent on the amount of water that needs to be applied, which will depend on local weather and/or weather forecast and/or user settings.
- Dosing Rate - called by the Scheduler when it determines the unit should apply solution. Determines the dose and generates corresponding duty cycle for control of the solenoid valve in device 10 or voltage for control of the pump in device 300.

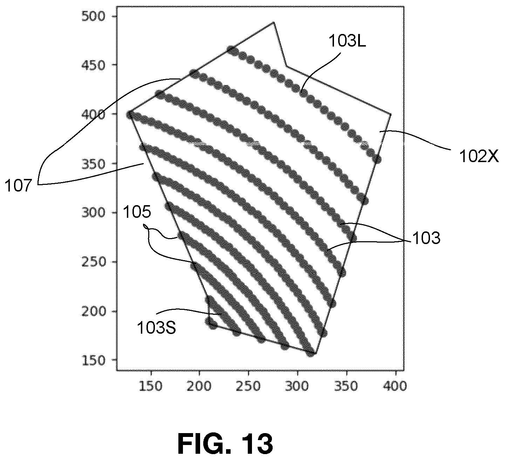

The Path Generation function can generate an irrigation path based on a set of co-ordinates representing nozzle angular position and measured pressure that are received as part of the calibration process discussed above. There is a relationship between the measured pressure and water jet throw distance r based on the particular design characteristics of the device 10, 300, and as such, the received co-ordinates represent a closed polygon, such as polygon 102X shown in Figure 13. A first step in the Path Generation function can be to generate the sizes of circular travel arcs 103 that will cover the polygon 102X. The further away the arc from the device 10,300, the larger the landing area of the water jet. As such, the function accounts for this increase in step size to apply water evenly to the area defined by the polygon 102X. Next, the function finds all points 105 where each circular arc 103 intersects with the polygon. Each point 105 can be described by polar and/or cartesian coordinates as well as a line 107 on which the point lies. The function can then generate an irrigation path 104 based on the circular segments or arcs 103 which intersect the polygon lines 107. Watering in an arc or circular pattern causes only the motor for the rotary drive mechanism to be in continuous use; the motorized flow control valve being adjusted only on arc transition. The function can arrange the irrigation path 104 over an ordered arrangement of arcs, for example, from lowest radius arc 103S to highest radius arc 103L, using a zig-zag pattern to conserve energy. Finally, as the landing area and flow rate of the water jet increases with increasing radius, the function can adjust the rotation speed or duty cycle of the rotary drive motor and number of passes of each arc in order to accurately apply various quantities of water, as dynamically computed by the Scheduler and the Pass Count and Duty Cycle functions.

Although specific advantages have been enumerated above, various embodiments may include some, none, or all of the enumerated advantages. Persons skilled in the art will appreciate that there are yet more alternative implementations and modifications possible, and that the above examples are only illustrations of one or more implementations. The scope, therefore, is only to be limited by the claims appended thereto.

## Claims

1. A lawn or garden maintenance device (10, 300), comprising: a housing; a water supply coupling (12, 312) provided on the housing; a sprinkler head nozzle (28, 328) rotatably mounted in the housing; a rotary drive mechanism mounted in the housing and operatively connected to the sprinkler head nozzle (28, 328) for bidirectional rotation of the sprinkler head nozzle (28, 328); means (34, 340) for measuring an angular position of the sprinkler head nozzle (28, 328); a main water line conduit (16, 316) disposed in the housing for fluidly connecting the water supply coupling (12, 312) and the sprinkler head nozzle (28, 328) ; a motorized variable valve (20, 320) disposed in the main water line conduit (16, 316) for adjusting rate of fluid flow therein; means (36, 336) for sensing pressure at or near the sprinkler head nozzle (28, 328); at least one container (44, 44A, 44B, 344, 344A, 344B) for storing concentrated liquid solution, the at least one container (44, 44A, 44B, 344, 344A, 344B) being enclosed by the housing; injection means, connected to the at least one solution container (44, 44A, 44B, 344, 344A, 344B) and encased by the housing, for injecting concentrated liquid solution into the main water line (16, 316) or sprinkler head nozzle (28, 328); **characterized by** a microcontroller (78) operatively coupled to the angular position measurement means (34, 340), the rotary drive mechanism, the pressure sensor means (36, 336), the motorized variable valve (20, 320) , and the solution injection means so as to (i) control an angular sweep of the sprinkler head spout (29, 329) through actuation of the rotary drive mechanism, (ii) control a sprinkler head water jet throw distance by controlling a position of the motorized variable valve (20, 320) , and (iii) control application of liquid solution by controlling the solution injection means; and means for powering the motorized variable valve (20, 320), the solution injection means, and the microcontroller.

2. A device (10, 300) according to claim 1, wherein the power means includes a rechargeable battery (70) for powering the motorized variable valve (20, 320), the solution injection means, and the microcontroller (78), and a solar panel (72) for recharging the rechargeable battery (70).

3. A device (10, 300) as claimed in claim 1, wherein the rotary drive mechanism (30, 330) includes: a bidirectional rotary motor (30, 330); a gear train (32, 33) operatively connecting the bidirectional rotary motor (30, 330) to the sprinkler head nozzle (28, 328).

4. A device (300) as claimed in claim 1 , wherein the injection means comprises at least one pump (350, 350A, 350B) having an inlet and outlet, the pump inlet being fluidly connected to the at least one container (344, 344A, 344B) and the pump outlet being fluidly connected to the sprinkler head nozzle (328).

5. A device (300) as claimed in claim **4,** including: a replaceable bottle, the replaceable bottle having a tube disposed therein for ingress of concentrated liquid solution stored within the bottle, the replaceable bottle sized for containment within the at least one container (344, 344A, 344B); a cap mountable on the replaceable bottle, the cap having a tube disposed therein for fluidly connection with the replaceable bottle tube, the cap tube being fluidly connected to the pump inlet.

6. A device (10) as claimed in claim 1 , wherein the injection means comprises: a piston (54) mounted within the at least one container (44, 44A, 44B), wherein the at least one container (44, 44A, 44B) is fluidly connected at an upstream end to receive water from the main water line (16) and is fluidly connected at a downstream end to dispense concentrated liquid solution to the main water line (16) or sprinkler head nozzle (28), and wherein concentrated liquid solution is stored between the piston (54) and the downstream end; and a second electronically controllable valve (46, 46A, 46B) installed upstream of the upstream end of the at least container (44, 44A, 44B) for regulating the amount of water flowing into the at least one container (44, 44A, 44B), the second valve (46, 46A, 46B) being operated connected to the microcontroller (78) for controlling the dispensation of concentrated liquid solution into the main water line (16) or sprinkler head nozzle (29).

7. A device (10) as claimed in claim 6, wherein the piston (54) has a puncture point for puncturing a sealing membrane of a solution refill bottle.

8. A device (10, 300) according to claim 1, wherein: the sprinkler head spout (29, 329) has an exit portion which, in operation, is disposed at a fixed angle relative to the ground, the sprinkler head spout (29, 329) generates a water jet; and the microcontroller (78) controls the rotary drive mechanism to distribute the water jet over a geometric area representing a user-defined application zone.

9. A device (10, 300) as claimed in claim 8, wherein the device (10, 300) can be calibrated to define and irrigate one more user-defined application zones by provisioning a web server and an application executing on a mobile device (mobile app) which communicates with the web server, wherein the microcontroller (78) is configured to communicate wirelessly with at least the mobile app which also provides a user interface to the device, wherein a user can define an application zone by:
(i) using the user interface to wirelessly communicate adjustments to the angular position of the sprinkler head spout (29, 329) and adjustments to the sprinkler head water jet throw distance, wherein in response to the requested adjustments the microcontroller (78) varies the angular position of the sprinkler head nozzle (28, 328) and varies the position of the variable valve (20, 320);
(ii) repeating procedure (i) until the sprinkler head angular position and water jet throw distance are confirmed by the user via the user interface, whereupon the angular position of the sprinkler head spout (29, 329) and the pressure measured by the pressure sensor (36, 336) are memorized by the web server in association with a first corner of the application zone; (iii) repeating procedures (i) and (ii) in respect of at least two additional corners of the application zone, whereby a closed geometry can be determined representing the application zone;
(iv) computing an irrigation path for irrigating the geometric area representing the application zone based on the memorized angular positions and pressures and storing the path at the server.

10. A device (10, 300) according to claim 9, wherein: the device microcontroller (78) can communicate with the web server; the device microcontroller (78) periodically polls the web server to determine whether to irrigate or not; the web server triggers the device to irrigate and communicates an irrigation path to the device microcontroller (78), wherein the web server dynamically computes the irrigation path for the user-defined application zone based on local weather data obtained by the web server.

11. A device (10, 300) according to claim 10, wherein the irrigation path is represented as a series of arcs, each arc represented by control data including at least two of: sprinkler head nozzle rotational position, water pressure or water jet throw distance, sprinkler head rotational speed or motor duty cycle, sprinkler head rotational direction, and number of passes.

12. A device (10, 300) according to claim 11, wherein control data communicated by the web server to the device includes data for control of the solution injection means.

13. A system for controlling yard maintenance at a plurality of sites, comprising: a web server; a yard maintenance device (10, 300) disposed at each of the sites, each maintenance device (10, 300) comprising a housing, a water supply coupling (12, 312) provided on the housing, a sprinkler head nozzle (28, 328) rotatably mounted in the housing, a rotary drive mechanism mounted in the housing and operatively connected to the sprinkler head nozzle (28, 328) for rotation of the sprinkler head nozzle (28, 328), means (34, 340) for measuring a rotational position of the sprinkler head nozzle (28, 328), a main water line conduit (16, 316) disposed in the housing for fluidly connecting the water supply coupling (12, 312) and the sprinkler head nozzle (28, 328), a motorized variable valve (20, 320) disposed in the main water line conduit (16, 316) for adjusting the fluid flow therein, a pressure sensor (36, 336) for sensing pressure at or near the sprinkler head nozzle (28, 328), at least one container (44, 44A, 44B, 344, 344A, 344B) for storing concentrated liquid solution, the at least one container (44, 44A, 44B, 344, 344A, 344B) being enclosed by the housing, solution injection means, connected to the at least one solution container (44, 44A, 44B, 344, 344A, 344B) and encased by the housing, for injecting concentrated liquid solution into the main water line or sprinkler head nozzle (28, 328), a microcontroller (78) operatively coupled to the angular position measurement means (34, 340), the rotary drive mechanism, the pressure sensor (36, 336), the motorized variable valve (20, 320), and the solution injection means so as to (i) control an angular sweep of the sprinkler head spout (29, 329) through actuation of the rotary drive mechanism, (ii) control a sprinkler head water jet throw distance by controlling a position of the motorized variable valve (20, 320), and (iii) control dispensation of liquid solution by controlling the solution injection means, and means for supplying electric power to drive the motorized variable valve (20, 320), the solution injection means, and the microcontroller (78); a web-based application, executable in part by the server, the yard maintenance device, and a mobile device associated with and configured to wirelessly communicate with a given yard maintenance device, for calibrating one or more application zones for the given yard maintenance device at a given site, wherein the software application enables a given user to define each application zone by (i) employing a user interface on the mobile device to virtually adjust rotational position of the sprinkler head nozzle (28, 328) and adjust sprinkler head water jet throw distance, wherein in response to the requested adjustments the microcontroller (78) associated with the given yard maintenance device (10, 300) varies the rotational position of the associated sprinkler head nozzle (28, 328) and varies the position of the associated variable valve (20, 320),
(ii) repeating procedure (i) until the sprinkler head rotational position and water jet throw distance are confirmed by the user through the mobile device user interface, whereupon the rotational position of the sprinkler head nozzle (28, 328) and the pressure measured by the associated pressure sensor (36, 336) are memorized by the server in association with a first corner of the application area,
(iii) repeating procedures (i) to (ii) in respect of at least two additional corners of the application area, until a closed geometry can be determined representing the application zone,
(iv) computing an irrigation path for irrigating the geometry representing the application zone based on the memorized angular positions and pressures and storing the path in the server; wherein the software application enables the given user to specify a type of solution in each of the containers (44, 44A, 44B, 344, 344A, 344B) associated with the given yard maintenance device (10, 300); wherein the server determines a fertigation schedule and fertigation path for the given yard maintenance device, the fertigation schedule and the path being based in part on local weather data associated with the given site; wherein the server dynamically signals the given yard maintenance device (10, 300) to commence irrigation and communicates the computed fertigation path thereto, the given yard maintenance device (10, 300) executing the computed fertigation path.

14. A system according to claim 13, wherein the mobile device user interface enables the given user to establish, for each defined application zone, the type of zone, as selected from a list of predefined zones, and the fertigation schedule is determined based in part on the zone type.

15. A system according to claim 13, wherein the fertigation path is represented as a series of arcs, each arc represented by control data including at least two of: sprinkler head nozzle rotational position, water pressure or water jet throw distance, sprinkler head rotational speed or motor duty cycle, sprinkler head rotational direction, and number of passes, and wherein control data includes data for controlling the solution injection means.

16. A system as claimed in claim 13, wherein the server tracks solution usage for user accounts.

## Patentansprüche

1. Rasen- oder Gartenpflegegerät (10, 300), umfassend: ein Gehäuse; eine Wasseranschlusskupplung (12, 312), die am Gehäuse bereitgestellt ist; eine Sprinklerkopfdüse (28, 328), die drehbar im Gehäuse montiert ist; einen im Gehäuse montierten Drehantriebsmechanismus, der für eine bidirektionale Drehung der Sprinklerkopfdüse (28, 328) betriebswirksam mit der Sprinklerkopfdüse (28, 328) geschaltet ist; Mittel (34, 340) zum Messen einer Winkelstellung der Sprinklerkopfdüse (28, 328); eine Hauptwasserleitung (16, 316), die im Gehäuse angeordnet ist, um die Wasseranschlusskupplung (12, 312) und die Sprinklerkopfdüse (28, 328) fluidisch zu verbinden; ein motorisiertes Stellventil (20, 320), das in der Hauptwasserleitung (16, 316) angeordnet ist, um die Rate des darin befindlichen Fluidstroms einzustellen; Druckerfassungsmittel (36, 336) an oder nahe der Sprinklerkopfdüse (28, 328); mindestens einen Behälter (44, 44A, 44B, 344, 344A, 344B) zum Speichern einer konzentrierten flüssigen Lösung, wobei der mindestens eine Behälter (44, 44A, 44B, 344, 344A, 344B) vom Gehäuse umschlossen ist; Einspritzmittel, die mit dem mindestens einen Behälter (44, 44A, 44B, 344, 344A, 344B) geschaltet und vom Gehäuse umschlossen ist, zum Einspritzen einer konzentrierten flüssigen Lösung in die Hauptwasserleitung (16, 316) oder die Sprinklerkopfdüse (28, 328); **dadurch gekennzeichnet, dass** ein Mikrocontroller (78) betriebswirksam gekoppelt ist mit dem Mittel zum Messen einer Winkelstellung (34, 340), dem Drehantriebsmechanismus, dem Druckerfassungsmittel (36, 336), dem motorisierten Stellventil (20, 320) und der Lösungseinspritzmittel, sodass er (i) einen Schwenkbereich des Auslassstutzens des Sprinklerkopfs (29, 329) durch Betätigung des Drehantriebsmechanismus regelt, (ii) die Wurfweite des Wasserstrahls regelt, indem er eine Stellung des motorisierten Stellventils (20, 320) regelt, und (iii) die Anwendung einer flüssigen Lösung regelt, indem er die Lösungseinspritzmittel regelt; und Mittel zur Stromversorgung des motorisierten Stellventils (20, 320), der Lösungseinspritzmittel, und des Mikrocontrollers.

2. Vorrichtung (10, 300) nach Anspruch 1, wobei die Mittel zur Stromversorgung eine wiederaufladbare Batterie (70) zur Versorgung des motorisierten Stellventils (20, 320), der Lösungseinspritzmittel, und des Mikrocontrollers (78) und ein Solarpanel (72) zum Wiederaufladen der wiederaufladbaren Batterie (70) einschließt.

3. Vorrichtung (10, 300) nach Anspruch 1, wobei der Drehantriebsmechanismus (30, 330) Folgendes einschließt: einen bidirektionalen Drehmotor (30, 330); ein Zahnradgetriebe (32, 33), das betriebswirksam zwischen dem bidirektionalen Drehmotor (30, 330) und der Sprinklerkopfdüse (28, 328) geschaltet ist.

4. Vorrichtung (300) nach Anspruch 1, wobei die Einspritzmittel mindestens eine Pumpe (350, 350A, 350B) mit einem Einlass und einem Auslass umfasst, wobei der Pumpeneinlass fluidisch mit dem mindestens einen Behälter (344, 344A, 344B) geschaltet ist und wobei der Pumpenauslass fluidisch mit der Sprinklerkopfdüse (328) geschaltet ist.

5. Vorrichtung (300) nach Anspruch 4, einschließlich: einer austauschbaren Flasche, wobei die austauschbare Flasche ein darin angeordnetes Rohr für den Eintritt einer in der Flasche gespeicherten konzentrierten flüssigen Lösung aufweist, wobei die austauschbare Flasche für eine Aufnahme innerhalb des mindestens einen Behälters (344, 344A, 344B) dimensioniert ist; eine Kappe, die an der austauschbaren Flasche montierbar ist, wobei die Kappe ein darin angeordnetes Rohr zur fluidischen Verbindung mit dem Rohr der austauschbaren Flasche aufweist, wobei das Rohr der Kappe fluidisch mit dem Pumpeneinlass geschaltet ist.

6. Vorrichtung (10) nach Anspruch 1, wobei die Einspritzmittel Folgendes umfasst: einen Kolben (54), der innerhalb des mindestens einen Behälters (44, 44A, 44B) montiert ist, wobei der mindestens eine Behälter (44, 44A, 44B) an einem stromaufwärtigen Ende fluidisch geschaltet ist, um Wasser aus der Hauptwasserleitung (16) aufzunehmen, und an einem stromabwärtigen Ende fluidisch geschaltet ist, um eine konzentrierte flüssige Lösung in die Hauptwasserleitung (16) oder die Sprinklerkopfdüse (28) abzugeben, und wobei eine konzentrierte flüssige Lösung zwischen dem Kolben (54) und dem stromabwärtigen Ende gespeichert ist; und ein zweites elektronisch steuerbares Ventil (46, 46A, 46B), das stromaufwärts des stromaufwärtigen Endes des mindestens einen Behälters (44, 44A, 44B) installiert ist, um die Menge des in den mindestens einen Behälter (44, 44A, 44B) einströmenden Wassers zu regeln, wobei das zweite Ventil (46, 46A, 46B) betriebswirksam mit dem Mikrocontroller (78) geschaltet ist, um die Abgabe einer konzentrierten flüssigen Lösung in die Hauptwasserleitung (16) oder die Sprinklerkopfdüse (29) zu regeln.

7. Vorrichtung (10) nach Anspruch 6, wobei der Kolben (54) einen Durchstoßpunkt zum Durchstoßen einer Dichtmembran einer Lösungsnachfüllflasche aufweist.

8. Vorrichtung (10, 300) nach Anspruch 1, wobei: der Auslassstutzen des Sprinklerkopfs (29, 329) einen Auslassabschnitt aufweist, der im Betrieb in einem festen Winkel relativ zum Boden angeordnet ist, der Auslassstutzen des Sprinklerkopfs (29, 329) einen Wasserstrahl erzeugt; und der Mikrocontroller (78) den Drehantriebsmechanismus regelt, um den Wasserstrahl über eine geometrische Bewässerungsfläche zu verteilen, die eine benutzerdefinierte Bewässerungszone repräsentiert.

9. Vorrichtung (10, 300) nach Anspruch 8, wobei die Vorrichtung (10, 300) kalibriert werden kann, um eine oder mehrere benutzerdefinierte Bewässerungszonen zu definieren und zu bewässern, durch Bereitstellen eines Webservers und einer auf einem mobilen Endgerät ausgeführten Anwendung (Mobile-App), die mit dem Webserver kommuniziert, wobei der Mikrocontroller (78) ausgebildet ist, mindestens mit der Mobile-App drahtlos zu kommunizieren, die auch eine Benutzeroberfläche für die Vorrichtung bereitstellt, wobei ein Benutzer eine Bewässerungszone wie folgt definieren kann:
(i) Verwenden der Benutzeroberfläche, um Anpassungen der Winkelstellung des Auslassstutzens des Sprinklerkopfs (29, 329) und Anpassungen der Wurfweite des Wasserstrahls drahtlos zu kommunizieren, wobei als Reaktion auf die angeforderten Anpassungen der Mikrocontroller (78) die Winkelstellung der Sprinklerkopfdüse (28, 328) variiert und die Stellung des motorisierten Stellventils (20, 320) variiert;
(ii) Wiederholen des Verfahrens (i), bis die Winkelstellung des Sprinklerkopfs und die Wurfweite des Wasserstrahls vom Benutzer über die Benutzeroberfläche bestätigt werden, woraufhin die Winkelstellung des Auslassstutzens des Sprinklerkopfs (29, 329) und der vom Drucksensor (36, 336) gemessene Druck vom Webserver in Zuordnung zu einer ersten Ecke der Bewässerungszone gespeichert werden; (iii) Wiederholen der Verfahren (i) und (ii) in Bezug auf mindestens zwei zusätzliche Ecken der Bewässerungszone, wobei eine geschlossene Geometrie bestimmt werden kann, die die Bewässerungszone repräsentiert;
(iv) Berechnen eines Bewässerungspfads zum Bewässern der Bewässerungsfläche, die die Bewässerungszone repräsentiert, basierend auf den gespeicherten Winkelstellungen und Drücken, und Speichern des Pfads auf dem Webserver.

10. Vorrichtung (10, 300) nach Anspruch 9, wobei: der Mikrocontroller (78) der Vorrichtung mit dem Webserver kommunizieren kann; der Mikrocontroller (78) der Vorrichtung periodisch den Webserver abfragt, um zu bestimmen, ob zu bewässern ist oder nicht; der Webserver die Vorrichtung zum Bewässern auslöst und einen Bewässerungspfad an den Mikrocontroller (78) der Vorrichtung kommuniziert, wobei der Webserver den Bewässerungspfad für die benutzerdefinierte Bewässerungszone dynamisch berechnet, basierend auf lokalen Wetterdaten, die vom Webserver erhalten werden.

11. Vorrichtung (10, 300) nach Anspruch 10, wobei der Bewässerungspfad als eine Reihe von Bögen repräsentiert ist, wobei jeder Bogen durch Steuerdaten repräsentiert ist, einschließlich mindestens zwei von: Drehstellung der Sprinklerkopfdüse, Wasserdruck oder Wurfweite des Wasserstrahls, Drehgeschwindigkeit des Sprinklerkopfs oder Motor-Tastgrad, Drehrichtung des Sprinklerkopfs und Anzahl der Durchgänge.

12. Vorrichtung (10, 300) nach Anspruch 11, wobei Steuerdaten, die vom Webserver an die Vorrichtung kommuniziert werden, Daten zum Regeln der Lösungseinspritzmittel einschließen.

13. System zum Regeln einer Rasen- oder Gartenpflege an einer Vielzahl von Standorten, umfassend: einen Webserver; ein Rasen- oder Gartenpflegegerät (10, 300), das an jedem der Standorte angeordnet ist, wobei jedes Pflegegerät (10, 300) ein Gehäuse umfasst, eine Wasseranschlusskupplung (12, 312), die am Gehäuse bereitgestellt ist, eine Sprinklerkopfdüse (28, 328), die drehbar im Gehäuse montiert ist, einen im Gehäuse montierten Drehantriebsmechanismus, der für eine Drehung der Sprinklerkopfdüse (28, 328) betriebswirksam mit der Sprinklerkopfdüse (28, 328) geschaltet ist, Mittel (34, 340) zum Messen einer Drehstellung der Sprinklerkopfdüse (28, 328), eine Hauptwasserleitung (16, 316), die im Gehäuse angeordnet ist, um die Wasseranschlusskupplung (12, 312) und die Sprinklerkopfdüse (28, 328) fluidisch zu verbinden, ein motorisiertes Stellventil (20, 320), das in der Hauptwasserleitung (16, 316) angeordnet ist, um den darin befindlichen Fluidstrom einzustellen, einen Drucksensor (36, 336) zum Erfassen von Druck an oder nahe der Sprinklerkopfdüse (28, 328), mindestens einen Behälter (44, 44A, 44B, 344, 344A, 344B) zum Speichern einer konzentrierten flüssigen Lösung, wobei der mindestens eine Behälter (44, 44A, 44B, 344, 344A, 344B) vom Gehäuse umschlossen ist, Lösungseinspritzmittel, die mit dem mindestens einen Behälter (44, 44A, 44B, 344, 344A, 344B) geschaltet und vom Gehäuse umschlossen sind, zum Einspritzen einer konzentrierten flüssigen Lösung in die Hauptwasserleitung oder die Sprinklerkopfdüse (28, 328), einen Mikrocontroller (78), der betriebswirksam gekoppelt ist mit dem Mittel zum Messen einer Winkelstellung (34, 340), dem Drehantriebsmechanismus, dem Drucksensor (36, 336), dem motorisierten Stellventil (20, 320), und der Lösungseinspritzmittel, sodass er (i) einen Schwenkbereich des Auslassstutzens des Sprinklerkopfs (29, 329) durch Betätigung des Drehantriebsmechanismus regelt, (ii) die Wurfweite des Wasserstrahls regelt, indem er eine Stellung des motorisierten Stellventils (20, 320) regelt, und (iii) die Abgabe einer flüssigen Lösung regelt, indem er die Einspritzmittel regelt, und Mittel zur Stromversorgung zum Bereitstellen elektrischer Energie zum Antreiben des motorisierten Stellventils (20, 320), der Lösungseinspritzmittels und des Mikrocontrollers (78); eine webbasierte Anwendung, die teilweise durch den Server, das Rasen- oder Gartenpflegegerät und ein mobiles Endgerät ausführbar ist, das einem gegebenen Rasen- oder Gartenpflegegerät zugeordnet und ausgebildet ist, drahtlos mit einem gegebenen Rasen- oder Gartenpflegegerät zu kommunizieren, zum Kalibrieren einer oder mehrerer Bewässerungszonen für das gegebene Rasen- oder Gartenpflegegerät an einem gegebenen Standort, wobei die Softwareanwendung einem gegebenen Benutzer ermöglicht, jede Bewässerungszone zu definieren, durch (i) Verwenden einer Benutzeroberfläche auf dem mobilen Endgerät, um eine Drehstellung der Sprinklerkopfdüse (28, 328) virtuell einzustellen und eine Wurfweite des Wasserstrahls einzustellen, wobei als Reaktion auf die angeforderten Anpassungen der Mikrocontroller (78), der dem gegebenen Rasen- oder Gartenpflegegerät (10, 300) zugeordnet ist, die Drehstellung der zugeordneten Sprinklerkopfdüse (28, 328) variiert und die Stellung des zugeordneten motorisierten Stellventils (20, 320) variiert,
(ii) Wiederholen des Verfahrens (i), bis die Drehstellung des Sprinklerkopfs und die Wurfweite des Wasserstrahls vom Benutzer über die Benutzeroberfläche des mobilen Endgeräts bestätigt werden, woraufhin die Drehstellung der Sprinklerkopfdüse (28, 328) und der vom zugeordneten Drucksensor (36, 336) gemessene Druck vom Server in Zuordnung zu einer ersten Ecke der Bewässerungsfläche gespeichert werden,
(iii) Wiederholen des Verfahrens (i) bis (ii) in Bezug auf mindestens zwei zusätzliche Ecken der Bewässerungsfläche, bis eine geschlossene Geometrie bestimmt werden kann, die die Bewässerungszone repräsentiert,
(iv) Berechnen eines Bewässerungspfads zum Bewässern der Geometrie, die die Bewässerungszone repräsentiert, basierend auf den gespeicherten Winkelstellungen und Drücken, und Speichern des Pfads im Server; wobei die Softwareanwendung dem gegebenen Benutzer ermöglicht, in jedem der Behälter (44, 44A, 44B, 344, 344A, 344B), die dem gegebenen Rasen- oder Gartenpflegegerät (10, 300) zugeordnet sind, einen Typ einer Lösung festzulegen; wobei der Server einen Fertigationszeitplan und einen Fertigationspfad für das gegebene Rasen- oder Gartenpflegegerät bestimmt, wobei der Fertigationszeitplan und der Pfad teilweise basierend auf lokalen Wetterdaten sind, die dem gegebenen Standort zugeordnet sind; wobei der Server dem gegebenen Rasen- oder Gartenpflegegerät (10, 300) dynamisch signalisiert, mit der Bewässerung zu beginnen, und den berechneten Fertigationspfad daran kommuniziert, wobei das gegebene Rasen- oder Gartenpflegegerät (10, 300) den berechneten Fertigationspfad ausführt.

14. System nach Anspruch 13, wobei die Benutzeroberfläche des mobilen Endgeräts dem gegebenen Benutzer ermöglicht, für jede definierte Bewässerungszone den Typ der Zone, wie aus einer Liste vordefinierter Zonen ausgewählt, festzulegen, und der Fertigationszeitplan teilweise basierend auf dem Zonentyp bestimmt wird.

15. System nach Anspruch 13, wobei der Fertigationspfad als eine Reihe von Bögen repräsentiert ist, wobei jeder Bogen durch Steuerdaten repräsentiert ist, einschließlich mindestens zwei von: Drehstellung der Sprinklerkopfdüse, Wasserdruck oder Wurfweite des Wasserstrahls, Drehgeschwindigkeit des Sprinklerkopfs oder Motor-Tastgrad, Drehrichtung des Sprinklerkopfs und Anzahl der Durchgänge, und wobei die Steuerdaten Daten zum Regeln der Lösungseinspritzmittel einschließen.

16. System nach Anspruch 13, wobei der Server die Lösungsnutzung für Benutzerkonten nachverfolgt.

## Revendications

1. Dispositif (10,300) d'entretien de pelouse ou de jardin, comprenant : un boîtier ; un raccord (12, 312) d'alimentation en eau disposé sur le boîtier ; une buse (28, 328) de tête d'arrosage montée de manière rotative dans le boîtier ; un mécanisme d'entraînement rotatif monté dans le boîtier et relié fonctionnellement à la buse (28, 328) de tête d'arrosage pour une rotation bidirectionnelle de la buse (28, 328) de tête d'arrosage ;
un moyen (34, 340) de mesure d'une position angulaire de la buse (28, 328) de tête d'arrosage ; une conduite d'eau principale (16, 316) disposée dans le boîtier pour mettre en communication fluidique le raccord (12, 312) d'alimentation en eau et la buse (28, 328) de tête d'arrosage ;
une vanne variable motorisée (20, 320) disposée dans la conduite d'eau principale (16, 316) pour ajuster le débit d'écoulement de fluide y circulant ; un moyen (36, 336) de détection de la pression au niveau ou à proximité de la buse (28, 328) de tête d'arrosage ; au moins un récipient (44, 44A, 44B, 344, 344A, 344B) pour stocker une solution liquide concentrée, l'au moins un récipient (44, 44A, 44B, 344, 344A, 344B) étant contenu dans le boîtier ; un moyen d'injection, relié à l'au moins un récipient (44, 44A, 44B, 344, 344A, 344B) de solution concentrée et contenu dans le boîtier, pour injecter une solution liquide concentrée dans la conduite d'eau principale (16, 316) ou la buse (28, 328) de tête d'arrosage ; **caractérisé par** un microcontrôleur (78) couplé fonctionnellement au moyen (34, 340) de mesure de position angulaire, au mécanisme d'entraînement rotatif, au moyen (36, 336) de détection de pression, à la vanne variable motorisée (20, 320) et au moyen d'injection de solution de manière à (i) commander un balayage angulaire du bec (29, 329) de tête d'arrosage par actionnement du mécanisme d'entraînement rotatif, (ii) commander une distance de jet d'eau de tête d'arrosage en commandant une position de la vanne variable motorisée (20, 320), et (iii) commander l'application de solution liquide en commandant le moyen d'injection de solution ; et un moyen d'alimentation de la vanne variable motorisée (20, 320), du moyen d'injection de solution et du microcontrôleur.

2. Dispositif (10, 300) selon la revendication 1, dans lequel le moyen d'alimentation électrique inclut une batterie rechargeable (70) pour alimenter la vanne variable motorisée (20, 320), le moyen d'injection de solution et le microcontrôleur (78), et un panneau solaire (72) pour recharger la batterie rechargeable (70).

3. Dispositif (10, 300) selon la revendication 1, dans lequel le mécanisme d'entraînement rotatif (30, 330) inclut : un moteur rotatif bidirectionnel (30, 330) ; un train (32, 33) d'engrenages reliant fonctionnellement le moteur rotatif bidirectionnel (30, 330) à la buse (28, 328) de tête d'arrosage.

4. Dispositif (300) selon la revendication 1, dans lequel le moyen d'injection comprend au moins une pompe (350, 350A, 350B) présentant une entrée et une sortie, l'entrée de la pompe étant en communication fluidique avec l'au moins un récipient (344, 344A, 344B) et la sortie de la pompe étant en communication fluidique avec la buse (328) de tête d'arrosage.

5. Dispositif (300) selon la revendication 4, incluant : une bouteille remplaçable, la bouteille remplaçable présentant un tube disposé en son sein pour l'entrée de solution liquide concentrée stockée dans la bouteille, la bouteille remplaçable étant dimensionnée pour être contenue dans l'au moins un récipient (344, 344A, 344B) ; un bouchon montable sur la bouteille remplaçable, le bouchon présentant un tube disposé en son sein pour une communication fluidique avec le tube de la bouteille remplaçable, le tube de bouchon étant en communication fluidique avec l'entrée de pompe.

6. Dispositif (10) selon la revendication 1, dans lequel le moyen d'injection comprend : un piston (54) monté à l'intérieur de l'au moins un récipient (44, 44A, 44B), dans lequel l'au moins un récipient (44, 44A, 44B) est en communication fluidique à une extrémité amont pour recevoir de l'eau provenant de la conduite d'eau principale (16) et est en communication fluidique à une extrémité aval pour distribuer une solution liquide concentrée vers la conduite d'eau principale (16) ou la buse (28) de tête d'arrosage, et dans lequel une solution liquide concentrée est stockée entre le piston (54) et l'extrémité aval ; et une deuxième vanne à commande électronique (46, 46A, 46B) installée en amont de l'extrémité amont de l'au moins un récipient (44, 44A, 44B) pour réguler la quantité d'eau s'écoulant dans l'au moins un récipient (44, 44A, 44B), la deuxième vanne (46, 46A, 46B) étant reliée fonctionnellement au microcontrôleur (78) pour commander la distribution de solution liquide concentrée dans la conduite d'eau principale (16) ou la buse (29) de tête d'arrosage.

7. Dispositif (10) selon la revendication 6, dans lequel le piston (54) présente une pointe de perforation pour perforer une membrane d'étanchéité d'un flacon de recharge de solution.

8. Dispositif (10, 300) selon la revendication 1, dans lequel : le bec (29, 329) de tête d'arrosage présente une partie de sortie qui, en fonctionnement, est disposée à un angle fixe par rapport à la terre, le bec (29, 329) de tête d'arrosage génère un jet d'eau ; et le microcontrôleur (78) commande le mécanisme d'entraînement rotatif pour distribuer le jet d'eau sur une zone géométrique représentant une zone d'application définie par l'utilisateur.

9. Dispositif (10, 300) selon la revendication 8, dans lequel le dispositif (10, 300) peut être étalonné pour définir et irriguer une ou plusieurs zones d'application définies par l'utilisateur en fournissant un serveur Web et une application s'exécutant sur un appareil mobile (application mobile) qui communique avec le serveur Web,
dans lequel le microcontrôleur (78) est configuré pour communiquer sans fil avec au moins l'application mobile qui fournit aussi une interface utilisateur au dispositif, dans lequel un utilisateur peut définir une zone d'application en :
(i) utilisant l'interface utilisateur pour communiquer sans fil des ajustements à la position angulaire du bec (29, 329) de tête d'arrosage et des ajustements à la distance de jet d'eau de tête d'arrosage, dans lequel, en réponse aux ajustements demandés, le microcontrôleur (78) fait varier la position angulaire de la buse (28, 328) de tête d'arrosage et fait varier la position de la vanne variable motorisée (20, 320) ;
(ii) répétant la procédure (i) jusqu'à ce que la position angulaire de tête d'arrosage et la distance de jet d'eau soient confirmées par l'utilisateur via l'interface utilisateur, après quoi la position angulaire du bec (29, 329) de tête d'arrosage
et la pression mesurée par le capteur de pression (36, 336) sont mémorisées par le serveur Web en association avec un premier coin de la zone d'application ; (iii) répétant les procédures (i) et (ii) en ce qui concerne au moins deux coins supplémentaires de la zone d'application, de telle sorte qu'une géométrie fermée représentant la zone d'application puisse être déterminée ;
(iv) calculant un trajet d'irrigation pour irriguer la zone géométrique représentant la zone d'application sur la base des positions angulaires et des pressions mémorisées et en stockant le trajet sur le serveur.

10. Dispositif (10, 300) selon la revendication 9, dans lequel : le microcontrôleur (78) de dispositif peut communiquer avec le serveur Web ; le microcontrôleur (78) de dispositif interroge périodiquement le serveur Web pour déterminer s'il faut irriguer ou non ; le serveur Web déclenche l'irrigation par le dispositif et communique un trajet d'irrigation au microcontrôleur (78) de dispositif,
dans lequel le serveur Web calcule dynamiquement le trajet d'irrigation pour la zone d'application définie par l'utilisateur sur la base de données météorologiques locales obtenues par le serveur Web.

11. Dispositif (10, 300) selon la revendication 10, dans lequel le trajet d'irrigation est représenté sous la forme d'une série d'arcs, chaque arc étant représenté par des données de commande incluant au moins deux parmi : une position de rotation de buse de tête d'arrosage, une pression d'eau ou une distance de jet d'eau, une vitesse de rotation de tête d'arrosage ou un cycle de service de moteur, un sens de rotation de tête d'arrosage et un nombre de passages.

12. Dispositif (10, 300) selon la revendication 11, dans lequel des données de commande communiquées par le serveur Web au dispositif incluent des données pour la commande du moyen d'injection de solution.

13. Système de commande d'entretien de jardin sur une pluralité de sites, comprenant :
un serveur Web ; un dispositif (10, 300) d'entretien de jardin disposé sur chacun des sites, chaque dispositif (10, 300) d'entretien de jardin comprenant un boîtier,
un raccord (12, 312) d'alimentation en eau disposé sur le boîtier, une buse (28, 328) de tête d'arrosage montée de manière rotative dans le boîtier, un mécanisme d'entraînement rotatif monté dans le boîtier et relié fonctionnellement à la buse (28, 328) de tête d'arrosage pour la rotation de la buse (28, 328) de tête d'arrosage,
un moyen (34, 340) de mesure d'une position de rotation de la buse (28, 328) de tête d'arrosage, une conduite d'eau principale (16, 316) disposée dans le boîtier pour mettre en communication fluidique le raccord (12, 312) d'alimentation en eau et la buse (28, 328) de tête d'arrosage,
une vanne variable motorisée (20, 320) disposée dans la conduite d'eau principale (16, 316) pour ajuster l'écoulement de fluide y circulant, un capteur de pression (36, 336) pour détecter la pression au niveau ou à proximité de la buse (28, 328) de tête d'arrosage,
au moins un récipient (44, 44A, 44B, 344, 344A, 344B) pour stocker une solution liquide concentrée, l'au moins un récipient (44, 44A, 44B, 344, 344A, 344B) étant contenu dans le boîtier, un moyen d'injection de solution, relié à l'au moins un récipient (44, 44A, 44B, 344, 344A, 344B) de solution concentrée et encastré dans le boîtier, pour injecter une solution liquide concentrée dans la conduite d'eau principale ou la buse (28, 328) de tête d'arrosage, un microcontrôleur (78) couplé fonctionnellement au moyen (34, 340) de mesure de position angulaire, au mécanisme d'entraînement rotatif, au capteur de pression (36, 336), à la vanne variable motorisée (20, 320),
et au moyen d'injection de solution de manière à (i) commander un balayage angulaire du bec (29, 329) de tête d'arrosage par actionnement du mécanisme d'entraînement rotatif, (ii) commander une distance de jet d'eau de tête d'arrosage en commandant une position de la vanne variable motorisée (20, 320),
et (iii) commander la distribution de solution liquide en commandant le moyen d'injection de solution, et un moyen d'alimentation électrique pour entraîner la vanne variable motorisée (20, 320), le moyen d'injection de solution et le microcontrôleur (78) ;
une application Web, exécutable en partie par le serveur, le dispositif d'entretien de jardin et un appareil mobile associé à un dispositif d'entretien de jardin donné et configuré pour communiquer sans fil avec celui-ci, pour étalonner une ou plusieurs zones d'application pour le dispositif d'entretien de jardin donné sur un site donné,
dans lequel l'application logicielle permet à un utilisateur donné de définir chaque zone d'application en (i) employant une interface utilisateur sur l'appareil mobile pour ajuster virtuellement la position de rotation de la buse (28, 328) de tête d'arrosage et ajuster la distance de jet d'eau de tête d'arrosage,
dans lequel, en réponse aux ajustements demandés, le microcontrôleur (78) associé au dispositif (10, 300) d'entretien de jardin donné fait varier la position de rotation de la buse (28, 328) de tête d'arrosage associée et fait varier la position de la vanne variable motorisée (20, 320) associée,
(ii) répétant la procédure (i) jusqu'à ce que la position de rotation de tête d'arrosage et la distance de jet d'eau soient confirmées par l'utilisateur au moyen de l'interface utilisateur d'appareil mobile, après quoi la position de rotation de la buse (28, 328) de tête d'arrosage et la pression mesurée par le capteur de pression (36, 336) associé sont mémorisées par le serveur en association avec un premier coin de la zone d'application,
(iii) répétant les procédures (i) à (ii) en ce qui concerne au moins deux coins supplémentaires de la zone d'application, jusqu'à ce qu'une géométrie fermée représentant la zone d'application puisse être déterminée,
(iv) calculant un trajet d'irrigation pour irriguer la géométrie représentant la zone d'application sur la base des positions angulaires et des pressions mémorisées et en stockant le trajet dans le serveur ;
dans lequel l'application logicielle permet à l'utilisateur donné de spécifier un type de solution dans chacun des récipients (44, 44A, 44B, 344, 344A, 344B) associés au dispositif (10, 300) d'entretien de jardin donné ; dans lequel le serveur détermine un programme de fertigation et un trajet de fertigation pour le dispositif d'entretien de jardin donné,
le programme de fertigation et le trajet étant basés en partie sur des données météorologiques locales associées au site donné ; dans lequel le serveur signale dynamiquement au dispositif (10, 300) d'entretien de jardin donné de commencer l'irrigation et lui communique le trajet de fertigation calculé, le dispositif (10, 300) d'entretien de jardin donné exécutant le trajet de fertigation calculé.

14. Système selon la revendication 13, dans lequel l'interface utilisateur d'appareil mobile permet à l'utilisateur donné d'établir, pour chaque zone d'application définie, le type de zone, tel que sélectionné dans une liste de zones prédéfinies, et le programme de fertigation est déterminé en partie sur la base du type de zone.

15. Système selon la revendication 13, dans lequel le trajet de fertigation est représenté sous la forme d'une série d'arcs, chaque arc étant représenté par des données de commande incluant au moins deux parmi : une position de rotation de buse de tête d'arrosage, une pression d'eau ou une distance de jet d'eau, une vitesse de rotation de tête d'arrosage ou un cycle de service du moteur, un sens de rotation de tête d'arrosage et un nombre de passages, et dans lequel les données de commande incluent des données pour commander le moyen d'injection de solution.

16. Système selon la revendication 13, dans lequel le serveur assure un suivi de la consommation de solution pour des comptes utilisateurs.
